# EUROPEAN PATENT APPLICATION

(11) **EP 3 868 508 A1**
(43) Date of publication of application: **25.08.2021**
(21) Application number: 21157821.6
(22) Date of filing: 18.02.2021
(51) Int. Cl.: B23K 26/03, B23K 26/042, B23K 26/06, B23K 31/12, B23K 26/08, B23K 26/36, B23K 101/40

(54) **LASER PROCESSING APPARATUS**

(30) Priority: 19.02.2020 JP 2020026426; 22.01.2021 JP 2021008549
(71) Applicant: Tokyo Seimitsu Co., Ltd., Hachioji-shi, Tokyo 192-8515 (JP)
(72) Inventor: IWAKI, Satoru, Tokyo, 192-8515 (JP)
(74) Representative: DehnsGermany Partnerschaft von Patentanwälten

(57) **Abstract**

A laser processing apparatus which can further improve the position accuracy and processing quality of laser processing is provided The laser processing apparatus which performs laser processing by relatively moving a table for holding a wafer and a laser head having a condensing lens for condensing a laser light onto a street on the wafer held on the table in a processing feed direction along the street while irradiating the street with a laser light from the laser head, so as to form a groove along the street, the laser processing apparatus includes: a camera configured to simultaneously capture an image of a laser spot of the laser light condensed on the street via the condensing lens and the groove while the laser processing is performed; and a measuring unit configured to measure position accuracy and processing quality of the laser processing based on the image captured by the camera.

## Description

### BACKGROUND OF THE INVENTION

### Field of the Invention

The present invention relates to a laser processing apparatus for performing laser processing on a wafer.

### Description of the Related Art

In recent years, in the field of manufacturing semiconductor devices, a well-known wafer (semiconductor wafer) has a plurality of devices formed thereon with a laminate body obtained by laminating a low dielectric constant insulator film (Low-k film) made of a vitreous material and a functional film forming a circuit on a surface of a substrate of silicon or the like. In such a wafer, a plurality of devices are partitioned in a grid pattern by grid-like streets (also referred to as planned dividing lines), and individual devices are manufactured by dividing the wafer along the streets.

As a method of dividing a wafer into a plurality of devices (chips), a method using a blade rotating at high speed, a method of forming a modified region inside a wafer along a street and applying an external force along the street, etc. are known. However, in a case of a wafer to which a Low-k film is applied, because the material of the Low-k film and the material of the wafer are different from each other, it is difficult in the former method to cut the insulating film and the substrate at the same time by the blade. Further, it is also difficult in the latter method to divide the wafer into individual devices with good quality when the Low-k film exists on the streets.

Japanese Patent Application Laid-Open No. 2009-182019 (hereinafter referred to as "Patent Literature 1") discloses a laser processing apparatus which performs edge-cutting processing for forming two streaks of edge-cut grooves (cutoff grooves) along a street of a wafer and hollowing processing for forming a hollowed groove (dividing groove) between the two streaks of edge-cut grooves. The laser processing apparatus includes a first laser beam irradiation unit corresponding to the edge-cutting processing, and a second laser beam irradiation unit corresponding to the hollowing processing (see Fig. 15 of Patent Literature 1). The first laser beam irradiation unit and the second laser beam irradiation unit are relatively moved toward one direction side in a processing feed direction (for example, toward an outbound direction side) with respect to the wafer, whereby the two streaks of edge-cut grooves and the hollowed groove are simultaneously formed (formed in parallel) along the same street, so as to remove the Low-k film and the like.

In such a laser processing apparatus, the formation position of the two streaks of edge-cut grooves may be deviated with respect to the street, or the formation position of the hollowed groove may be deviated with respect to the formation position of the two streaks of edge-cut grooves, due to change in offset amount of each component caused by temperature fluctuation, a processing feed error (straightness error), an installation error (assembly error), an operation error, etc. of each component of an optical system.

Therefore, for the laser processing apparatus, the two streaks of edge-cut grooves and the hollowed grooves are imaged by various types of microscopes or cameras at preset timings, and a kerf check for measuring the processing positions, processing widths, chipping, etc. of the two streaks of edge-cut grooves and the hollowed grooves based on respective captured images is performed.

For example, Japanese Patent No. 6498553 (hereinafter referred to as "Patent Literature 2") discloses a laser processing apparatus which images a processed groove (kerf) formed by laser processing by using an observation optical system which is provided coaxially with a laser processing optical system of the laser processing apparatus, and performs a kerf check based on the captured image. Further, Japanese Patent No. 6210902 (hereinafter referred to as "Patent Literature 3") discloses a laser processing apparatus which performs the edge-cutting processing and the hollowing processing in different regions within an outer peripheral margin region of a workpiece, and performs a kerf check individually on the two streaks of edge-cut grooves and the hollowed groove respectively formed in the outer peripheral margin region.

Further, the laser processing apparatus has a risk that a laser profile of a laser light at a processing point is disturbed during laser processing due to fluctuation in the output of the laser light, abnormality of the laser light, foreign substances on an optical path of an optical system, dirt on a condensing lens, etc., so that the processing quality of the two streaks of edge-cut grooves and the hollowed groove may deteriorate.

Therefore, Japanese Patent Application Laid-Open No. 2017-120820 (hereinafter referred to as "Patent Literature 4") discloses a laser processing apparatus which images a laser spot (also referred to as a beam plasma or a condensed point) of a laser light during laser processing, and detects whether or not the laser spot is located at a desired position based on the captured image.

### List of Documents

Patent Literature 1: Japanese Patent Application Laid-Open No. 2009-182019
Patent Literature 2: Japanese Patent No. 6498553
Patent Literature 3: Japanese Patent No. 6210902
Patent Literature 4: Japanese Patent Application Laid-Open No. 2017-120820

### SUMMARY OF THE INVENTION

In the laser processing apparatus described in Patent Literature 2, the kerf check is performed by using the observation optical system provided coaxially with the laser processing optical system, so that it is possible to perform a so-called real-time kerf check in which a kerf check for a processed groove is performed in parallel to laser processing during the laser processing. However, when the edge-cutting processing and the hollowing processing are performed along a street as described in Patent Literature 1, it is impossible to image only a hollowed grooved because the hollowed groove is formed between two streaks of edge-cut grooves which have been already formed. Therefore, in the laser processing apparatus described in Patent Literature 2, although it is possible to perform the kerf check for the two streaks of edge-cut grooves alone, it is impossible to perform the kerf check for the hollowed groove alone.

In the laser processing apparatus described in Patent Literature 3, it is necessary to perform the edge-cutting processing and the hollowing processing in an outer peripheral margin region of a workpiece to perform the kerf check. Therefore, the above-mentioned real-time kerf check cannot be performed, and even if an abnormality occurs during processing, the abnormality cannot be detected immediately.

In the laser processing apparatuses described in Patent Literature 2 and Patent Literature 3, only the outer shapes of the processed grooves (the two streaks of edge-cut grooves and the hollowed groove) are imaged. Therefore, it is impossible to check whether or not the laser processing is performed while the laser light itself is in an appropriate state. As a result, it is impossible to detect an abnormality occurring during laser processing, and it cannot be said that the position accuracy and processing quality of laser processing are sufficiently maintained.

On the other hand, in the laser processing apparatus described in Patent Literature 4, it is possible to detect the position of a laser spot of a laser light. However, even if an abnormality occurs in the shape of a processed groove, it is impossible to detect the abnormality only by imaging and observing the laser spot. Therefore, it cannot be said that the position accuracy and processing quality of laser processing are sufficiently maintained.

The present invention has been made in view of such circumstances, and aims to provide a laser processing apparatus capable of further improving the position accuracy and processing quality of laser processing.

In order to attain the object of the present invention, a laser processing apparatus which performs laser processing by relatively moving a table for holding a wafer and a laser head having a condensing lens for condensing a laser light onto a street on the wafer held on the table in a processing feed direction along the street while irradiating the street with a laser light from the laser head, so as to form a groove along the street, the laser processing apparatus includes: a camera configured to simultaneously capture an image of a laser spot of the laser light condensed on the street via the condensing lens and the groove while the laser processing is performed; and a measuring unit configured to measure position accuracy and processing quality of the laser processing based on the image captured by the camera.

According to the laser processing apparatus described above, the position accuracy and processing quality of the laser processing can be measured at the same time.

A laser processing apparatus according to another aspect of the present invention further includes: an illumination light source which is configured to emit an illumination light; a main optical path which is configured to guide the laser light and the illumination light emitted from the illumination light source to the condensing lens, and to which a first reflected light of the laser light and a second reflected light of the illumination light reflected from the street are incident from the condensing lens; and a branch optical element arranged on the main optical path, and configured to emit the first reflected light and the second reflected light incident to the main optical path toward a branched optical path split from the main optical path, wherein the camera is arranged on the branched optical path and images the first reflected light and the second reflected light to generate an image of the laser spot and the groove. Therefore, the position accuracy and processing quality of the laser processing can be measured simultaneously with each other.

A laser processing apparatus according to another aspect of the present invention further includes a light amount reducing filter arranged on the branched optical path and configured to reduce a light amount of the first reflected light incident to the camera. Therefore, occurrence of overexposure in a captured image can be prevented.

In a laser processing apparatus according to another aspect of the present invention, a wavelength of the laser light and a wavelength region of the illumination light are different from each other, and the light amount reducing filter is a band stop filter configured to reduce a light amount of light corresponding to a wavelength region of the laser light. Therefore, occurrence of overexposure in the captured image can be prevented.

A laser processing apparatus according to another aspect of the present invention further includes: an illumination light source configured to emit an illumination light in a wavelength region different from a wavelength region of the laser light; a main optical path which is configured to guide the laser light and the illumination light emitted from the illumination light source to the condensing lens, and to which a first reflected light of the laser light and a second reflected light of the illumination light reflected from the street are incident from the condensing lens; a first branch optical element arranged on the main optical path, and configured to emit the first reflected light incident to the main optical path toward a first branched optical path split from the main optical path; and a second branch optical element arranged on the main optical path, and configured to emit the second reflected light incident to the main optical path toward a second branched optical path split from the main optical path, wherein the camera includes: a first camera arranged on the first branched optical path and configured to image the first reflected light; and a second camera arranged on the second branched optical path and configured to image the second reflected light, and wherein sensitivity of the first camera is set to be lower than sensitivity of the second camera. Therefore, occurrence of overexposure in the captured image can be prevented.

In a laser processing apparatus according to another aspect of the present invention, edge-cutting processing for forming two streaks of grooves parallel to each other along the street, and hollowing processing for forming a groove between the two streaks of grooves are performed as the laser processing, and the camera simultaneously images the laser spots and the grooves corresponding to the edge-cutting processing through the condensing lens while the edge-cutting processing is performed, and simultaneously images the laser spot and the groove corresponding to the hollowing processing through the condensing lens while the hollowing processing is performed.

A laser processing apparatus according to another aspect of the present invention further includes: a first illumination light source for illuminating an edge-cutting region of the street through the condensing lens while the edge-cutting processing is performed; and a second illumination light source for illuminating a hollowing region of the street through the condensing lens while the hollowing processing is performed.

A laser processing apparatus according to another aspect of the present invention further includes a mirror mechanism provided on the optical path of the laser light, and the mirror mechanism includes: a plurality of mirrors; and an adjustment mechanism configured to adjust at least either positions or attitudes of the plurality of mirrors.

In a laser processing apparatus according to another aspect of the present invention, the condensing lens includes a first condensing lens and two second condensing lenses which are arranged in a row along the processing feed direction together with the first condensing lens with the first condensing lens being interposed between the second condensing lenses, and the laser head includes: a laser light emitting system configured to emit two first laser lights corresponding to the edge-cutting processing and a second laser light corresponding to the hollowing processing as the laser light; and a connection optical system configured to guide the two first laser lights emitted from the laser light emitting system to the first condensing lens, and guide the second laser light emitted from the laser light emitting system selectively to the two second condensing lenses. In a case where the laser head is moved relative to the table, toward any one direction side of an outbound direction side and an inbound direction side in the processing feed direction, the connection optical system guides the second laser light emitted from the laser light emitting system to one of the second condensing lenses which is located on another direction side of the outbound direction side and the inbound direction side with respect to the first condensing lens, and the camera is provided for each of the first condensing lens and the two second condensing lenses. Therefore, a tact time required for laser processing on a wafer can be reduced.

In a laser processing apparatus according to another aspect of the present invention, the laser light emitting system includes: a laser light source configured to emit the laser light; a branching element configured to split the laser light emitted from the laser light source into two parts; a first light forming element configured to form and emit the two first laser lights from one of the two parts of the laser light split by the branching element; a second light forming element configured to form and emit the second laser light from another of the two parts of the laser light split by the branching element; and a mirror mechanism arranged on at least either optical paths of the two first laser lights or an optical path of the second laser light, and the mirror mechanism includes: a plurality of mirrors; and an adjustment mechanism configured to adjust at least ones of positions and attitudes of the plurality of mirrors.

In a laser processing apparatus according to another aspect of the present invention, the condensing lens includes: a first condensing lens; and two second condensing lenses arranged in a row along the processing feed direction together with the first condensing lens, with the first condensing lens being interposed between the second condensing lenses, and the laser head includes: a first laser light emitting system configured to emit two first laser lights corresponding to the edge-cutting processing as the laser light; two second laser light emitting systems configured to emit a second laser light corresponding to the hollowing processing as the laser light; a first connection optical system configured to guide the two first laser lights emitted from the first laser light emitting system to the first condensing lens; and a second connection optical system configured to guide the second laser light emitted from one of the second laser light emitting systems to one of the second condensing lenses which is located on an inbound direction side in the processing feed direction with respect to the first condensing lens in a case where the laser head is moved relative to the table, toward an outbound direction side in the processing feed direction, and guide the second laser light emitted from another of the second laser light emitting systems to the other of the second condensing lenses which is located on the outbound direction side in the processing feed direction with respect to the first condensing lens in a case where the laser head is moved relative to the table, toward the inbound direction side in the processing feed direction, and the camera is provided for each of the first condensing lens and the two second condensing lenses.

A laser processing apparatus according to another aspect of the present invention further includes a mirror mechanism provided on optical paths of the two first laser lights and an optical path of the second laser light, and the mirror mechanism includes: a plurality of mirrors; and an adjustment mechanism configured to adjust at least ones of positions and attitudes of the plurality of mirrors.

The present invention can further improve the position accuracy and processing quality of laser processing.

### BRIEF DESCRIPTION OF THE DRAWINGS

Fig. 1 is a schematic diagram of a laser processing apparatus according to a first embodiment;
Fig. 2 is a plan view of a wafer;
Fig. 3 is an explanatory diagram for illustrating laser processing along an odd-numbered street;
Fig. 4 is an explanatory diagram for illustrating laser processing along an even-numbered street;
Fig. 5 is an explanatory diagram for illustrating: edge-cutting processing and hollowing processing by a laser head that is moved toward an outbound direction side relative to the wafer; simultaneous imaging of a laser spot and two streaks of edge-cut grooves; and simultaneous imaging of a laser spot and a hollowed groove;
Fig. 6 is an explanatory diagram for illustrating: edge-cutting processing and the hollowing processing by the laser head that is moved toward an inbound (return) direction side relative to the wafer; simultaneous imaging of a laser spot and two streaks of edge-cut grooves; and simultaneous imaging of a laser spot and a hollowed groove;
Fig. 7 is a functional block diagram of a control device;
Fig. 8 is an explanatory diagram for illustrating the measurement of the position accuracy of the edge-cutting processing by a position accuracy measuring unit;
Fig. 9 is an explanatory diagram for illustrating the measurement of the position accuracy of the hollowing process by the position accuracy measuring unit;
Fig. 10 is an explanatory diagram for illustrating the measurement of processing quality of the edge-cutting processing by a processing quality measuring unit;
Fig. 11 is an explanatory diagram for illustrating the measurement of processing quality of the hollowing processing by the processing quality measuring unit;
Fig. 12 is a flowchart showing the flow of laser processing on each street of a wafer by the laser processing apparatus;
Fig. 13 is a schematic diagram of a laser head of a laser processing apparatus according to a second embodiment;
Fig. 14 is a schematic diagram of a laser head of a laser processing apparatus according to a third embodiment;
Fig. 15 is a schematic diagram of a laser head of a laser processing apparatus according to a fourth embodiment;
Fig. 16 is a schematic diagram of a laser head of a laser processing apparatus according to a fifth embodiment;
Fig. 17 is a schematic diagram of a laser head of a laser processing apparatus according to a sixth embodiment; and
Fig. 18 is a schematic diagram of a laser head of a laser processing apparatus according to a seventh embodiment.

### DETAILED DESCRIPTION OF THE PREFERRED EMBODIMENTS

### [Overall Configuration of Laser Processing Apparatus of First Embodiment]

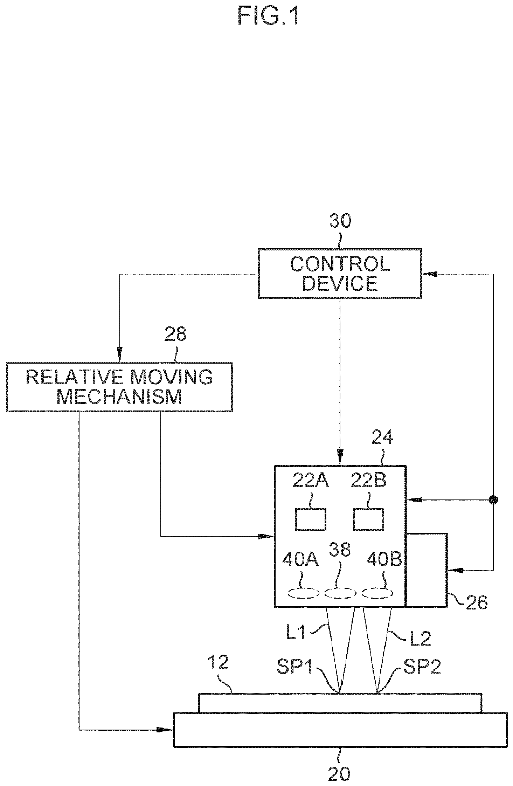

Fig. 1 is a schematic diagram of a laser processing apparatus 10 according to a first embodiment. As shown in Fig. 1, the laser processing apparatus 10 performs laser processing (also referred to as laser ablation processing or ablation groove processing) along a plurality of streets C on a wafer 12. Note that X, Y, and Z directions in the figures are orthogonal to one another, the X and Y directions thereof being horizontal directions and the Z direction being an up-and-down direction. Here, the X direction corresponds to the processing feed direction of the present invention, and the Y direction corresponds to the vertical direction of the present invention.

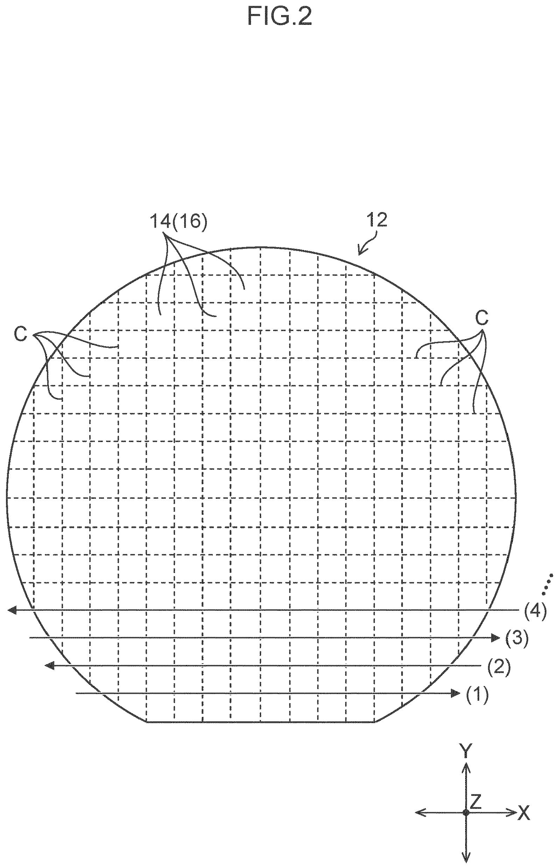

Fig. 2 is a plan view of the wafer 12. As shown in Fig. 2, the wafer 12 is a laminate body in which a Low-k film and a functional film forming a circuit are laminated on the surface of a substrate made of silicon or the like. The wafer 12 is partitioned into a plurality of regions by a plurality of streets C arranged in a grid-like pattern. In each of the partitioned regions, a device 16 constituting a chip 14 is provided.

As indicated by numbers in parentheses (1) to (4), etc. in Fig. 2, for each street C along one direction of directions intersecting with each other, the laser processing apparatus 10 performs laser processing for removing the Low-k film, etc. on the substrate along the street C. Further, when the laser processing on all streets C parallel to the one direction is completed, the laser processing apparatus 10 rotates the wafer 12 by 90°, and for each street C along the other direction, the laser processing apparatus performs laser processing for removing the low-k film, etc. along the street C.

At this time, in order to reduce a tact time required for the laser processing on the wafer 12, the laser processing apparatus 10 alternately switches, for each street C, the processing feed direction (relative moving direction) when relatively moving a laser head 24 described later in the X direction with respect to the wafer 12.

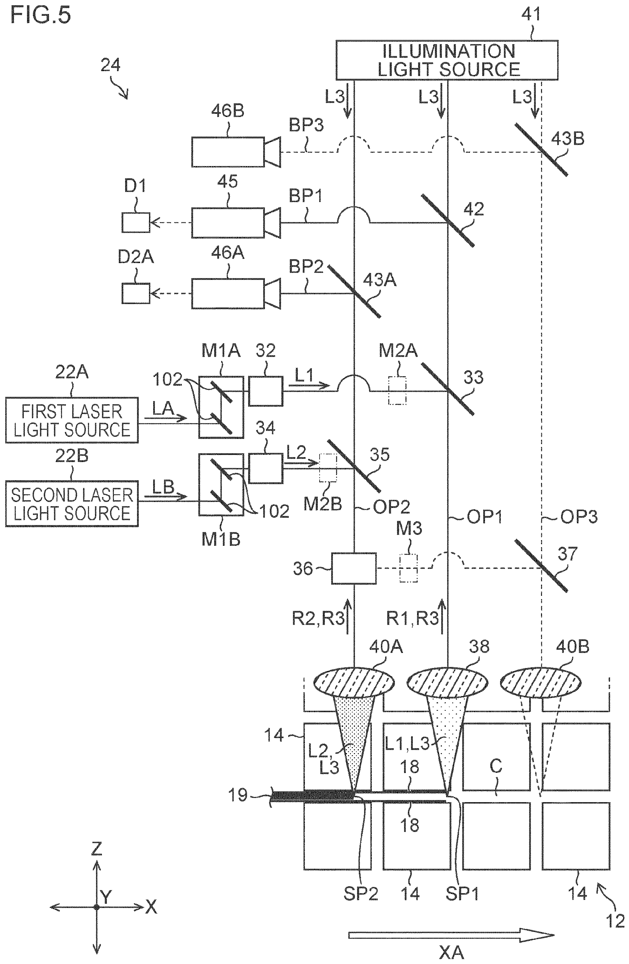

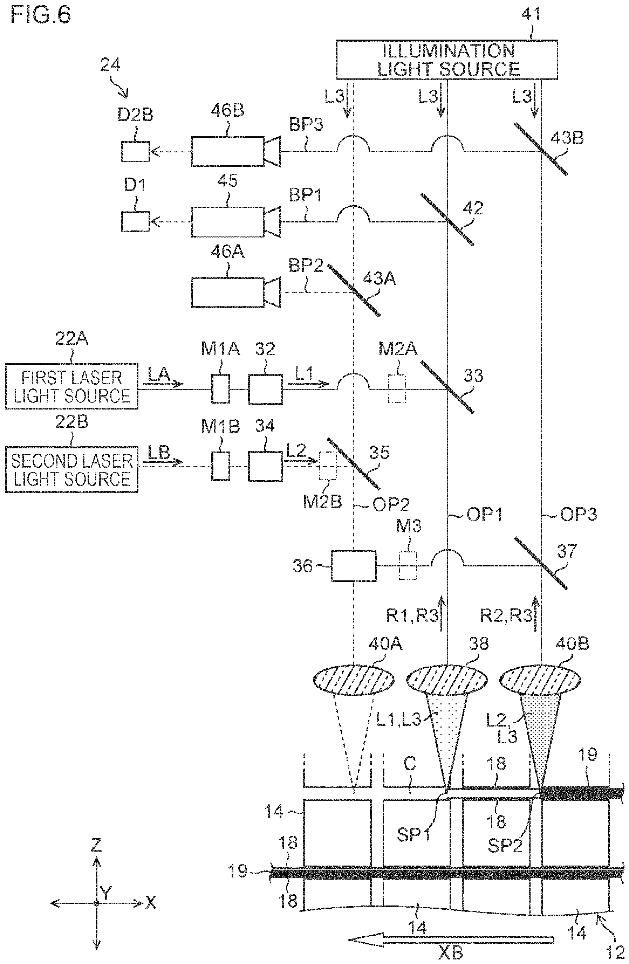

For example, when the laser processing is performed along odd-numbered streets C indicated by the numbers (1) and (3), etc. in parentheses in Fig. 2, the laser head 24 described later is moved toward an outbound direction side XA (see Fig. 5) which is one direction side in the X direction relatively to the wafer 12. Further, when the processing is performed along even-numbered streets C indicated by the numbers (2) and (4), etc. in parentheses in Fig. 2, the laser head 24 is moved toward an inbound direction side XB (see Fig. 6) which is the other direction side in the X direction relatively to the wafer 12.

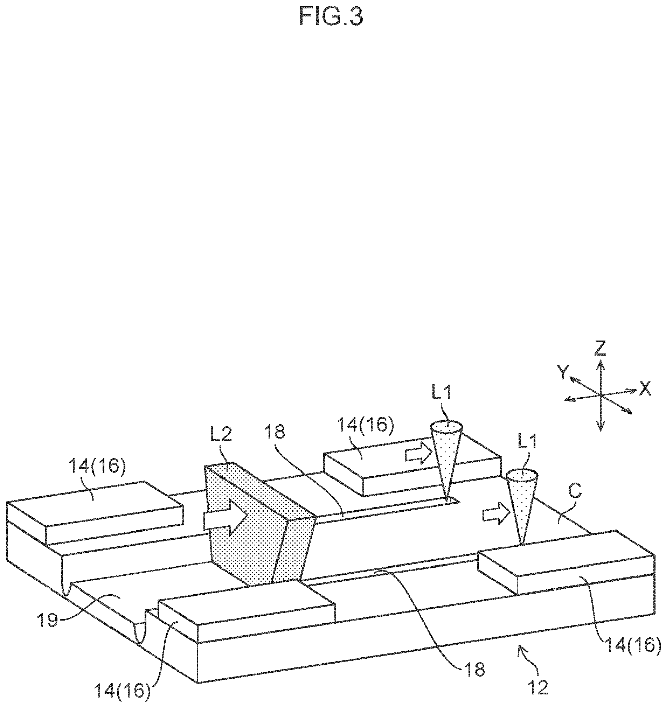

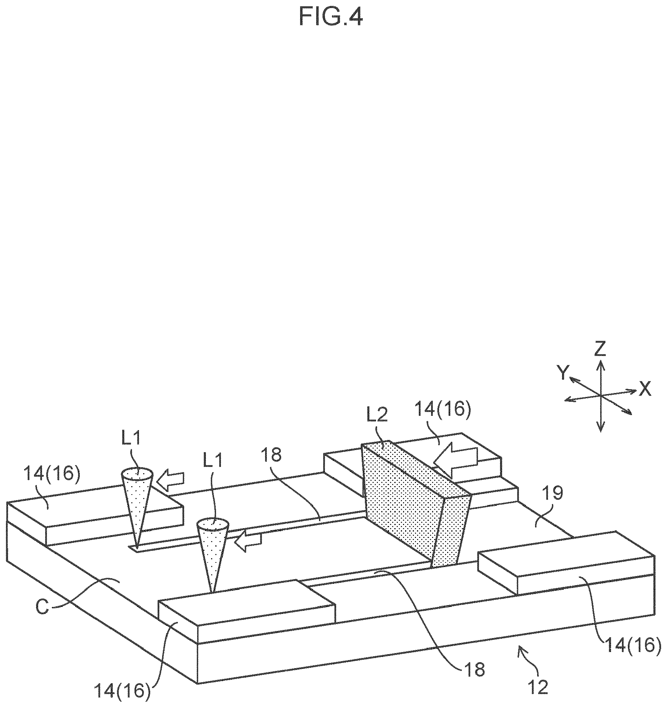

Fig. 3 is an explanatory diagram for illustrating the laser processing along an odd-numbered street C. Fig. 4 is an explanatory diagram for illustrating the laser processing along an even-numbered street C.

As shown in Figs. 3 and 4, in the present embodiment, the edge-cutting processing and the hollowing processing are simultaneously performed as the laser processing (in parallel). The edge-cutting processing is laser processing which is performed by using two first laser lights L1 and forms two streaks of edge-cut grooves 18 (ablation grooves corresponding to two streaks of first grooves of the present invention) parallel to each other along a street C. The hollowing processing is laser processing which is performed by using one second laser light L2 having a diameter larger than that of the two first laser lights LI and forms a hollowed groove 19 (an ablation groove corresponding to a second groove of the present invention) between the two streaks of edge-cut grooves 18 formed by the edge-cutting processing. Note that the two streaks of edge-cut grooves 18 and the hollowed groove 19 are publicly-known techniques (see Patent Literature 1), and thus the detailed description thereof is omitted.

As described above, in the laser processing apparatus 10, the edge-cutting processing is performed prior to the hollowing processing in both a case where the laser head 24 is moved toward the outbound direction side XA (see Fig. 5) relative to the wafer 12 and a case where the laser head 24 is moved toward the inbound direction side XB (see Fig. 6) relative to the wafer 12.

Returning to Fig. 1, the laser processing apparatus 10 performs: the simultaneous imaging of the laser spots SP1 of the two first laser lights L1 and the two streaks of edge-cut grooves 18; and the simultaneous imaging of the laser spot SP2 of the second laser light L2 and the two streaks of edge-cut grooves 18 (containing the hollowed groove 19), in parallel to the laser processing on the street C.

The laser processing apparatus 10 includes a table 20, a laser head 24, a microscope 26, a relative moving mechanism 28, and a control device 30.

The table 20 holds the wafer 12. The table 20 is moved in the X direction which is the processing feed direction parallel to a street C to be processed, and is rotated around the central axis (rotation axis) of the table 20 parallel to the Z direction by the relative moving mechanism 28.

The laser head 24 (also referred to as a laser optical system or a laser unit) includes a first laser light source 22A, a second laser light source 22B, a first condensing lens 38, and two second condensing lenses 40A and 40B. The laser head 24 emits two first laser lights L1 from the first condensing lens 38 to a street C. Further, the laser head 24 emits a second laser light L2 selectively from the two second condensing lenses 40A and 40B to the street C. Note that the laser head 24 is moved in the Y direction and the Z direction by the relative moving mechanism 28

The microscope 26 is fixed to the laser head 24, and moves integrally with the laser head 24. The microscope 26 picks up an image of an alignment reference formed on the wafer 12 are performed on the wafer 12, before the edge-cutting processing and the hollowing processing. As the alignment reference, the street C, the device 16, or a known alignment mark is used.

The relative moving mechanism 28 includes an XYZ actuator, a motor, and the like (not shown). Under the control of the control device 30, the relative moving mechanism 28 moves the table 20 in the X direction and rotates the table 20 around the rotation axis, and moves the laser head 24 in the Y direction and the Z direction. In this way, the relative moving mechanism 28 can move the laser head 24 and the microscope 26 relative to the table 20 and the wafer 12.

By driving the relative moving mechanism 28, it is possible to perform positioning (alignment) of the laser head 24 at a processing start position which is one end of the street C to be processed, and also perform relative movement of the laser head 24 in the processing feed direction (X direction) along the street C. Further, by driving the relative moving mechanism 28 to rotate the table 20 by 90°, respective streets C intersecting with each other can be selectively made parallel to the processing feed direction (X direction).

The control device 30 comprehensively controls the operations of the respective components of the laser processing apparatus 10 such as the laser head 24, the microscope 26, the relative moving mechanism 28, and the like to perform alignment of the laser head 24, laser processing on each street C, simultaneous imaging of laser spots SP1 and two streaks of edge-cut grooves 18, and simultaneous imaging of a laser spot SP2 and a hollowed groove 19, and the like.

### [Laser Head]

Fig. 5 is an explanatory diagram for illustrating the edge-cutting processing and the hollowing processing by the laser head 24 which is moved toward the outbound direction side XA relatively to the wafer 12, the simultaneous imaging of the laser spots SP1 and the two streaks of edge-cut grooves 18, and the simultaneous imaging of the laser spot SP2 and the hollowed groove 19. Fig. 6 is an explanatory diagram for illustrating the edge-cutting processing and the hollowing processing by the laser head 24 which is moved toward the inbound direction side XB relatively to the wafer 12, the simultaneous imaging of the laser spots SP1 and the two streaks of edge-cut grooves 18, and the simultaneous imaging of the laser spot SP2 and the hollowed groove 19.

Hereinafter, an odd-numbered street C to be processed by the laser head 24 that is moved toward the outbound direction side XA relatively to the wafer 12, is appropriately referred to as an "outbound path", and an even-numbered street C to be processed by the laser head 24 that is moved toward the inbound direction side XB relatively to the wafer 12, is appropriately referred to as an "inbound path".

As shown in Figs. 5 and 6, the laser head 24 includes the first laser light source 22A, the second laser light source 22B, steering mirror mechanisms M1A and M1B, a first light forming element 32, a beam splitter 33, and a second light forming element 34. a beam splitter 35, a connection switching element 36, a beam splitter 37, the first condensing lens 38, the second condensing lenses 40A and 40B, an illumination light source 41, beam splitters 42, 43A and 43B, and cameras 45, 46A, and 46B. Note that the first laser light source 22A, the second laser light source 22B, the first light forming element 32, the second light forming element 34, and the like constitute a laser light emitting system of the present invention.

Under the control of the control device 30, the first laser light source 22A emits laser light LA satisfying conditions suitable for the edge-cutting processing (wavelength, pulse width, repetition frequency, etc.) to the first light forming element 32 through the steering mirror mechanism MIA described later. Under the control of the control device 30, the second laser light source 22B emits laser light LB satisfying conditions suitable for the hollowing processing (wavelength, pulse width, repetition frequency, etc.) to the second light forming element 34 through the steering mirror mechanism M1B described later.

For example, a diffractive optical element (DOE) is used as the first light forming element 32. The first light forming element 32 forms two first laser lights L1 corresponding to the edge-cutting processing from the laser light LA incident from the first laser light source 22A, and emits the two first laser lights L1 to the beam splitter 33. In this way, a part of the two first laser lights L1 is reflected toward the first condensing lens 38 by the beam splitter 33. As a result, the two first laser lights L1 are condensed on the street C (outbound and inbound paths) by the first condensing lens 38, so that two laser spots SP1 which are spaced from each other in the Y direction are formed on the street C.

Although not shown, optical paths of the two first laser lights L1 which extend from the first light forming element 32 to the first condensing lens 38 (including various optical elements provided on the optical paths) constitute a part of the connection optical system of the present invention.

For example, a diffraction optical element, a mask, and the like are used as the second light forming element 34. The second light forming element 34 forms a second laser light L2 corresponding to the hollowing processing, using the laser light LB incident from the second laser light source 22B. The second laser light L2 forms one laser spot SP2 having a rectangular shape (which may be another shape such as a circular shape) between the two streaks of edge-cut grooves 18 on the wafer 12. The width of this spot in the Y direction is adjusted according to the distance between the two streaks of edge-cut grooves 18. A part of the second laser light L2 emitted from the second light forming element 34 is reflected to the connection switching element 36 by the beam splitter 35.

The connection switching element 36 constitutes the connection optical system of the present invention. A publicly-known optical switch or the like is used as the connection switching element 36. Note that the connection switching element 36 may be configured by appropriately combining various optical elements [a λ/2 plate, a polarization beam splitter, a half mirror (beam splitter), a shutter, etc.]. The connection switching element 36 guides the second laser light L2 emitted from the second light forming element 34 selectively to the second condensing lens 40A and the second condensing lens 40B (to the beam splitter 37 through the steering mirror mechanism M1B). The beam splitter 37 reflects a part of the second laser light L2 incident from the connection switching element 36 to the second condensing lens 40B.

The first condensing lens 38 and the second condensing lenses 40A and 40B are arranged in a row along the X direction (processing feed direction). The first condensing lens 38 is arranged between the second condensing lens 40A and the second condensing lens 40B. The second condensing lens 40A is arranged on the inbound direction side XB with respect to the first condensing lens 38. The second condensing lens 40B is arranged on the outbound direction side XA with respect to the first condensing lens 38.

The first condensing lens 38 condenses the two first laser lights L1 incident from the first light forming element 32 onto the street C (outbound and inbound paths). The second condensing lens 40A condenses the second laser light L2 incident from the connection switching element 36 onto the street C (outbound path). The second condensing lens 40B condenses the second laser light L2 incident from the connection switching element 36 via the beam splitter 37 onto the street C (inbound path).

When the laser head 24 is moved toward any one direction side of the outbound direction side XA and the inbound direction side XB relatively to the wafer 12, the connection switching element 36 guides the second laser light L2 emitted from the second light forming element 34 to the lens out of the second condensing lenses 40A and 40B, which is located on the other direction side of the outbound direction side XA and the inbound direction side XB with respect to the first condensing lens 38.

Specifically, when the laser head 24 is moved toward the outbound direction side XA relatively to the wafer 12, the connection switching element 36 guides the second laser light L2 emitted from the second light forming element 34 to the second condensing lens 40A (see FIG. 5), which causes the second laser light L2 to be condensed on the street C (outbound path) by the second condensing lens 40A. In this way, the edge-cutting processing is performed precedingly along the street C (outbound path) by the relative movement of the laser head 24 to the outbound direction side XA, so as to form the two streaks of edge-cut grooves 18. Subsequently, the hollowing processing is performed, so as to form the hollowed groove 19 between the two streaks of edge-cut grooves 18.

Further, when the laser head 24 is moved toward the inbound side XB relatively to the wafer 12, the connection switching element 36 guides the second laser light L2 emitted from the second light forming element 34 to the second condensing lens 40B (see Fig. 6). In this way, the second laser light L2 is condensed on the street C (inbound path) by the second condensing lens 40B. As a result, the edge-cutting processing is performed precedingly along the street C (inbound path) by the relative movement of the laser head 24 to the inbound direction side XB, so as to form the two streaks of edge-cut grooves 18. Subsequently, the hollowing processing is performed, so as to form the hollowed groove 19 between the two streaks of edge-cut grooves 18.

The illumination light source 41 emits illumination light L3 for illuminating a street C (two streaks of edge-cut grooves 18 and a hollowed groove 19) under laser processing. Note that in order to suppress the influence of aberrations in the first condensing lens 38 and the second condensing lenses 40A and 40B, light in a wavelength region (about 430 nm) close to the wavelength region (about 355 nm) of the laser light LA and LB is used as the illumination light L3.

The illumination light L3 emitted from the illumination light source 41 is incident to the first condensing lens 38 via the beam splitters 42 and 33, and condensed on the street C (the outbound and inbound paths) and the two streaks of edge-cut grooves 18. In this way, during the edge-cutting processing of the street C (the outbound and inbound paths), the street C (the outbound and inbound paths) and the two streaks of edge-cut grooves 18 are illuminated with the illumination light L3.

Further, the illumination light L3 emitted from the illumination light source 41 is incident to the second condensing lens 40A via the beam splitters 43A and 35 and the connection switching element 36, and condenses onto the street C (outbound path), the two streaks of edge-cut grooves 18 and the hollowed groove 19 by the second condensing lens 40A. Further, the illumination light L3 is incident to the second condensing lens 40B via the beam splitters 43B and 37, and condensed on the street C (inbound path), the two streaks of edge-cut grooves 18, and the hollowed groove 19 by the second condensing lens 40B. In this way, the street C, the two streaks of edge-cut grooves 18, and the hollowed groove 19 are illuminated with the illumination light L3 during the hollowing processing of the street C (outbound and inbound paths).

A main optical path OP1 is configured by: an optical path extending from the first laser light source 22A to the first condensing lens 38; and an optical path extending from the illumination light source 41 to the first condensing lens 38. The main optical path OP1 guides the first laser light L1 and the illumination light L3 to the first condensing lens 38. Further, reflected laser light R1 (corresponding to first reflected light) which is reflected light of the first laser light L1 reflected from the street C (outbound and inbound paths) and reflected illumination light R3 (corresponding to second reflected light) which is reflected light of the illumination light L3 are incident to the main optical path OP1 from the first condensing lens 38. A part of each of the reflected lights R1 and R3 incident to the main optical path OP1 passes through the beam splitter 33 and enters the beam splitter 42.

A main optical path OP2 is configured by: an optical path extending from the second laser light source 22B to the second condensing lens 40A; and an optical path extending from the illumination light source 41 to the second condensing lens 40A. The main optical path OP2 guides the second laser light L2 and the illumination light L3 to the second condensing lens 40A. Further, reflected laser light R2 (corresponding to first reflected light) which is reflected light of the second laser light L2 reflected from the street C (outbound path) and the above-mentioned reflected illumination light R3 are incident to the main optical path OP2 from the second condensing lens 40A. A part of each of the reflected lights R2 and R3 incident to the main optical path OP2 passes through the connection switching element 36 and the beam splitter 35, and enters the beam splitter 43A.

A main optical path OP3 is configured by: an optical path extending from the second laser light source 22B to the second condensing lens 40B; and an optical path extending from the illumination light source 41 to the second condensing lens 40B. The main optical path OP3 guides the second laser light L2 and the illumination light L3 to the second condensing lens 40B. Further, each of the reflected lights R2 and R3 reflected from the street C (inbound path) is incident to the main optical path OP3 from the second condensing lens 40B. A part of each of the reflected lights R2 and R3 incident to the main optical path OP3 passes through the beam splitter 37 and enters the beam splitter 43B.

The beam splitters 42, 43A and 43B (including the half mirror) correspond to a branch optical element of the present invention. A branch optical path BP1 is split from the main optical path OP1 by the beam splitter 42. The beam splitter 42 reflects a part of each of the reflected lights R1 and R3 incident from the beam splitter 33, toward the branch optical path BP1.

A branch optical path BP2 is split from the main optical path OP2 by the beam splitter 43A. The beam splitter 43A reflects a part of each of the reflected lights R2 and R3 incident from the beam splitter 35, toward the branch optical path BP2.

A branch optical path BP3 is split from the main optical path OP3 by the beam splitter 43B. The beam splitter 43B reflects a part of each of the reflected lights R2 and R3 incident from the beam splitter 37, toward the branch optical path BP3.

The cameras 45, 46A, and 46B are electronic cameras each including an imaging optical system and an imaging device (not shown). The camera 45 is arranged on the branch optical path BP1, and images the reflected light R1 and the reflected light R3 incident from the beam splitter 42. As a result, the camera 45 simultaneously images the laser spots SP1 and the two streaks of edge-cut grooves 18 through the first condensing lens 38, while the edge-cutting processing is performed on the street C (outbound path and inbound path). A captured image D1 (image data) of the laser spots SP1 and the two streaks of edge-cut grooves 18 which have been simultaneously imaged by the camera 45, is output from the camera 45 to the control device 30.

The camera 46A is arranged on the branch optical path BP2, and images each of the reflected lights R2 and R3 incident from the beam splitter 43A. In this way, the camera 46A simultaneously images, through the second condensing lens 40A, the laser spot SP2 and the hollowed groove 19 together with the two streaks of edge-cut grooves 18 which have been precedently formed, while the hollowing processing is performed on the street C (outbound path). A captured image D2A (image data) of the laser spot SP2, the two streaks of edge-cut grooves 18, etc. which have been simultaneously imaged by the camera 46A, is output from the camera 46A to the control device 30.

The camera 46B is arranged on the branch optical path BP3, and images each of the reflected lights R2 and R3 incident from the beam splitter 43B. In this way, the camera 46B simultaneously images, through the second condensing lens 40B, the laser spot SP2 and the hollowed groove 19 together with the two streaks of edge-cut grooves 18 which have been precedently formed, while the hollowing processing is performed on the street C (inbound path). A captured image D2B (image data) of the laser spot SP2, the two streaks of edge-cut grooves 18, etc. which have been simultaneously imaged by the camera 46B, is output from the camera 46B to the control device 30.

Note that when an image is captured by the cameras 45, 46A, 46B, such an image that the street C is stationary may be captured by shortening the exposure time for imaging, or such an image that the street C streams may be captured by lengthening the exposure time for imaging.

### [Control Device]

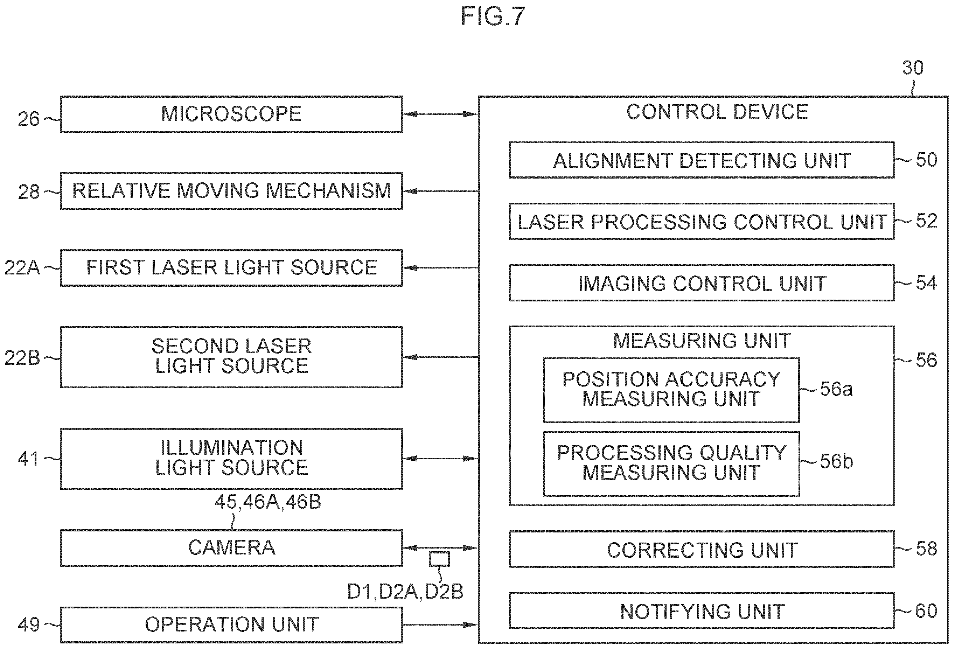

Fig. 7 is a functional block diagram of the control device 30. As shown in Fig. 7, the control device 30 is configured by a computing device such as a personal computer, and includes an arithmetic circuit comprising various processors, memories, and the like. The various processors include CPU (Central Processing Unit), GPU (Graphics Processing Unit), ASIC (Application Specific Integrated Circuit), and programmable logic devices [for example, SPLD (Simple Programmable Logic Devices), CPLD (Complex Programmable Logic Device), and FPGA (Field Programmable Gate Arrays)] etc. Note that the various functions of the control device 30 may be implemented by one processor, or may be implemented by a plurality of processors of the same type or different types.

In addition to the first laser light source 22A, the second laser light source 22B, the microscope 26, the relative moving mechanism 28, the illumination light source 41, and the cameras 45, 46A, 46B described above, an operation unit 49 is connected the control device 30. A keyboard, a mouse, an operation panel, operation buttons, and the like are used for the operation unit 49, and the operation unit 49 accepts inputs of various operations by an operator.

The control device 30 functions as an alignment detecting unit 50, a laser processing control unit 52, an imaging control unit 54, a measuring unit 56, a correcting unit 58 and a notifying unit 60 by executing control programs (not shown) stored in a storage unit (not shown). Note that what is described as "- unit" in the control device 30 may be "-circuit", "- device", or "- equipment". In other words, what is described as "- unit" may be configured by any of firmware, software, hardware, and a combination thereof.

### <Alignment Detecting Unit>

The alignment detecting unit 50 controls the microscope 26 and the relative moving mechanism 28 to perform alignment detection for detecting the position of each street C on the wafer 12. First, the alignment detecting unit 50 drives the relative moving mechanism 28 to execute position adjustment of the microscope 26 with respect to a predetermined alignment reference in the wafer 12. Next, the alignment detecting unit 50 causes the microscope 26 to perform imaging of the alignment reference and acquires a captured image of the alignment reference from the microscope 26. Then, the alignment detecting unit 50 detects the alignment reference in the captured image using a publicly-known image recognition method, thereby detecting the position of each street C, that is, performing the alignment detection based on the captured image of the alignment reference.

### <Laser Processing Control Unit>

The laser processing control unit 52 controls the first laser light source 22A, the second laser light source 22B, the relative moving mechanism 28, and the connection switching element 36 based on an alignment detection result obtained by the alignment detecting unit 50 to perform the laser processing (the edge-cutting processing, the hollowing processing) on each street C.

Specifically, the laser processing control unit 52 drives the relative moving mechanism 28 based on the detection result of the alignment detecting unit 50 to perform positioning (alignment) of the optical axis of the first condensing lens 38 of the laser head 24 at a processing start position of the street C (outbound and inbound paths).

Further, the laser processing control unit 52 drives the connection switching element 36 to switch the lens for emitting the second laser light L2 to the second condensing lens 40A when performing the laser processing on the street C (outbound path), and switch the lens for emitting the second laser light L2 to the second condensing lens 40B when performing the laser processing on the street C (inbound path).

The laser processing control unit 52 causes the first laser light source 22A and the second laser light source 22B to emit the laser lights LA and LB therefrom. Further, the laser processing control unit 52 drives the relative moving mechanism 28 to move the laser head 24 toward the outbound direction side XA relatively to the wafer 12 when performing the laser processing on the street C (outbound path), and to move the laser head 24 toward the inbound direction side XB relatively to the wafer 12 when performing the laser processing on the street C (inbound path). In this way, the formation of the two streaks of edge-cut grooves 18 by the edge-cutting processing and the formation of the hollowed groove 19 by the hollowing processing are simultaneously performed, with being spaced from each other (see Figs. 5 and 6). Hereinafter, the laser processing control unit 52 repeatedly executes the above-described processing for each street C.

### <Imaging Control Unit>

The imaging control unit 54 controls the illumination light source 41 and the cameras 45, 46A and 46B to control the imaging of captured images D1, D2A, and D2B by the cameras 45, 46A, 46B. Specifically, the imaging control unit 54 continuously emits the illumination light L3 from the illumination light source 41 during the laser processing on the street C (outbound and inbound paths). In this way, the street C, the two streaks of edge-cut grooves 18 and the hollowed groove 19 are illuminated with the illumination light L3.

Further, the imaging control unit 54 continuously causes the camera 45 to image-capture the reflected lights R1 and R3 and causes the camera 46A to image-capture the reflected lights R2 and R3 during the laser processing on the street C (outbound path). In this way, simultaneous imaging of the laser spots SP1 and the two streaks of edge-cut grooves 18 by the camera 45, output of the captured image D1 from the camera 45, simultaneous imaging of the laser spot SP2, the two streaks of edge-cut grooves 18 and the like by the camera 46A, and output of the captured image D2A from the camera 46A are performed in parallel during the laser processing on the street C (outbound path).

Further, the imaging control unit 54 continuously causes the camera 45 to image-capture the reflected lights R1 and R3 and causes the camera 46B to image-capture the reflected lights R2 and R3 during the laser processing on the street C (inbound path). In this way, simultaneous imaging by the above-mentioned camera 45, output of the captured image D1 from the camera 45, simultaneous imaging of the laser spot SP2, the two streaks of edge-cut grooves 18 and the like by the camera 46B, and output of the captured image D2B from the camera 46B are executed in parallel during the laser processing on the street C (inbound path).

### <Measuring Unit>

The measuring unit 56 measures the position accuracy and processing quality of the laser processing (edge-cutting processing and hollowing processing) based on the captured images D1, D2A, and D2B output from the cameras 45, 46A, and 46B. The measuring unit 56 functions as a position accuracy measuring unit 56a and a processing quality measuring unit 56b.

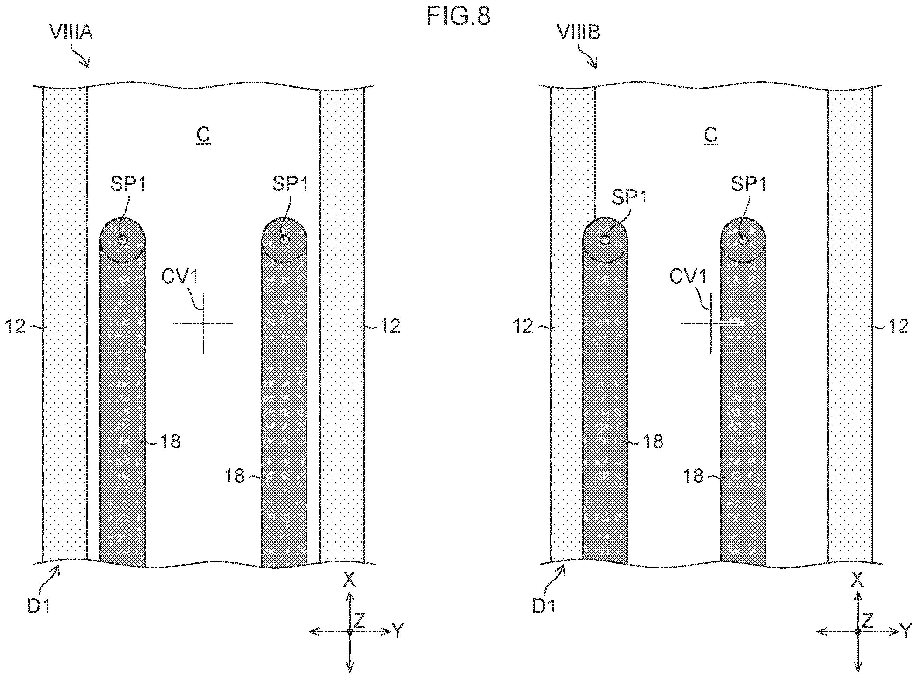

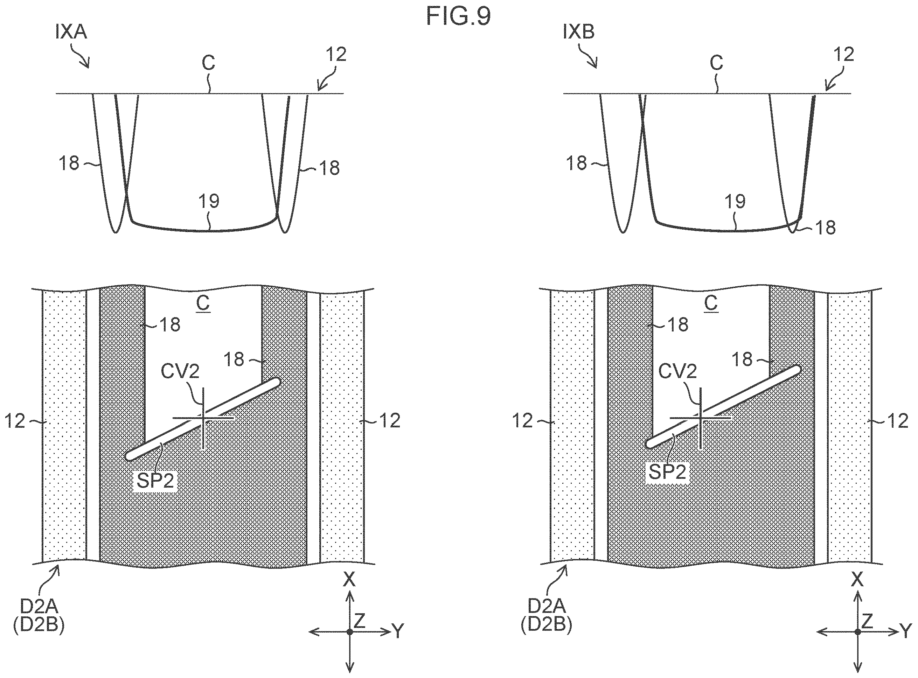

Note that it is assumed that the positional relationship of the optical axes of the first condensing lens 38 and the second condensing lenses 40A and 40B with the optical axis of the alignment microscope 26, has been measured and adjusted in advance. In other words, the optical axis of the first condensing lens 38 (center of visual field CV1, see Fig. 8), the optical axis of the second condensing lenses 40A and 40B (center of visual field CV2, see Fig. 9) and the reference position of the street C have been adjusted and the like in advance so as to be aligned with one another in the Y direction during laser processing.

Further, the laser processing apparatus 10 has performed each of the edge-cutting processing and the hollowing processing alone on a wafer 12 (product wafer) or a mirror wafer in advance, whereby the position and appearance of each of the laser spots SP1 and SP2, the two streaks of edge-cut grooves 18 and the hollowed groove 19 in the captured images D1, D2A and D2B has been also measured in advance.

### (Position Accuracy Measurement of Edge-cutting processing)

Fig. 8 is an explanatory diagram for illustrating the measurement of the position accuracy of the edge-cutting processing by the position accuracy measuring unit 56a. Note that reference character VIIIA in Fig. 8 designates an example of ideal edge-cutting processing along the center of the street C (outbound and inbound paths). Further, reference character VIIIB in Fig. 8 designates an example in which the edge-cutting processing is positionally deviated in the Y direction from the center of the street C (outbound and inbound paths).

As shown in Fig. 8 and Fig. 7 described above, the position accuracy measuring unit 56a measures the position accuracy of the edge-cutting processing based on the captured image D1 output from the camera 45 during the edge-cutting processing on the street C (outbound and inbound paths).

Specifically, the position accuracy measuring unit 56a detects the center position of each of two laser spots SP1 and the center position of each of two streaks of edge-cut grooves 18 from the captured image D1. Then, the position accuracy measuring unit 56a measures the positional relationship (misalignment (positional displacement) in the Y direction) of the center position of each laser spots SP1 with respect to the center CV1 of visual field corresponding to the optical axis position of the first condensing lens 38. Further, the position accuracy measuring unit 56a measures the positional relationship (misalignment (positional displacement) in the Y direction) of the center position of each of the two streaks of edge-cut grooves 18 with respect to the center CV1 of visual field .

### (Position Accuracy Measurement for Hollowing Processing)

Fig. 9 is an explanatory diagram for illustrating the measurement of the position accuracy of the hollowing processing by the position accuracy measuring unit 56a. Note that reference character IXA in Fig. 9 designates an example of ideal hollowing processing along the center of the street C (outbound and inbound paths). Further, reference character IXB in Fig. 9 designates an example in which the position of the edge-cutting processing and the position of the hollowing processing are deviated in the Y direction. Further, an upper stage of each example is a cross-sectional view of the two streaks of edge-cut grooves 18 and the hollowed groove 19, and a lower stage of each example is a diagram showing examples of the captured images D2A and D2B. Reference character CV2 in Fig. 9 designates the center of visual field corresponding to the positions of the optical axis of the second condensing lenses 40A and 40B.

As shown in Fig. 9 and Fig. 7 described above, the position accuracy measuring unit 56a measures the position accuracy of the hollowing processing based on the captured image D2A output from the camera 46A during the hollowing processing on the street C (outbound path), and measures the position accuracy of the hollowing processing based on the captured image D2B output from the camera 46B during the hollowing processing on the street C (inbound path).

Specifically, the position accuracy measuring unit 56a detects, from the captured images D2A and D2B, the center position of the laser spot SP2 and the Y-direction center position of the two streaks of edge-cut grooves 18 precedingly formed (the middle position between the center positions of the respective two streaks of edge-cut grooves 18). Then, the position accuracy measuring unit 56a measures the positional relationship (misalignment in the Y direction) between the center position of the laser spot SP2 and the Y-direction center position of the two streaks of edge-cut grooves 18.

### (Processing Quality Measurement for Edge-cutting Processing)

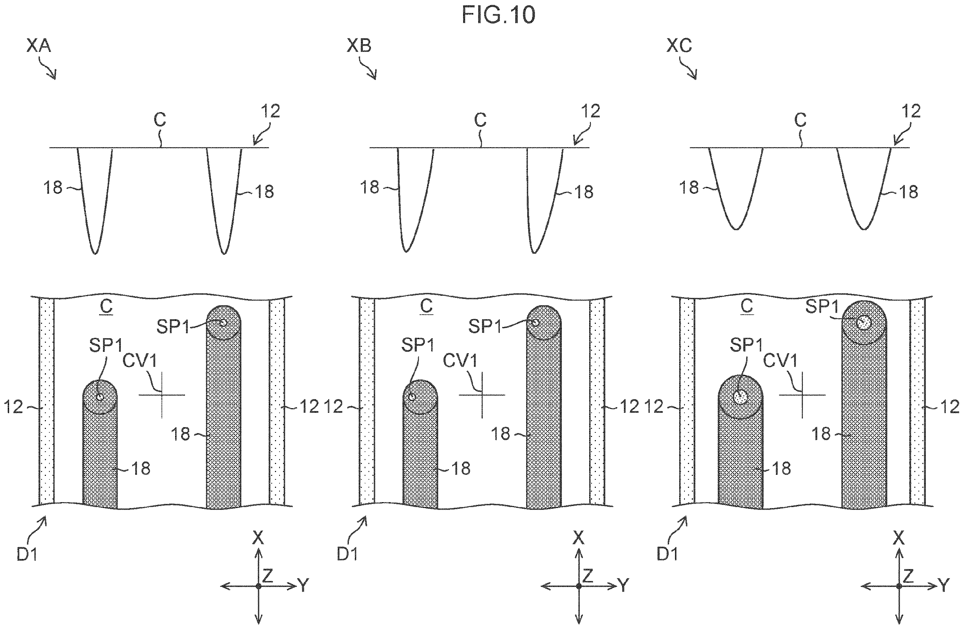

Fig. 10 is an explanatory diagram for illustrating the measurement of the processing quality of the edge-cutting processing by the processing quality measuring unit 56b. Note that reference character XA in Fig. 10 designates an example of ideal edge-cutting processing, reference character XB in Fig. 10 designates an example of edge-cutting processing in a state where the two first laser lights L1 are biased (deviated), and reference character XC in Fig. 10 designates an example of edge-cutting processing in a state where the diameters of the two first laser lights L1 are increased. Further, an upper stage of each example is a cross-sectional view of the two streaks of edge-cut grooves 18, and a lower stage of each example is a diagram showing an example of the captured image D1.

As shown in Fig. 10 and Fig. 7 described above, the processing quality measuring unit 56b measures the processing quality of the edge-cutting processing based on the captured image D1 output from the camera 45 during the edge-cutting processing on the street C (outbound path and inbound path).

Specifically, the processing quality measuring unit 56b detects the laser spots SP1 from the captured image D1 and measures the shape, size (diameter) and brightness of the laser spots SP1. Further, the processing quality measuring unit 56b detects the center position of each of the laser spots SP1 and the center position of each of the two streaks of edge-cut grooves 18 from the captured image D1, and measures the deviation in the Y direction of the center position of each of the laser spots SP1 with respect to the center position of each of the two streaks of edge-cut grooves 18 (see reference character XB).

### (Processing Quality Measurement for Hollowing Processing)

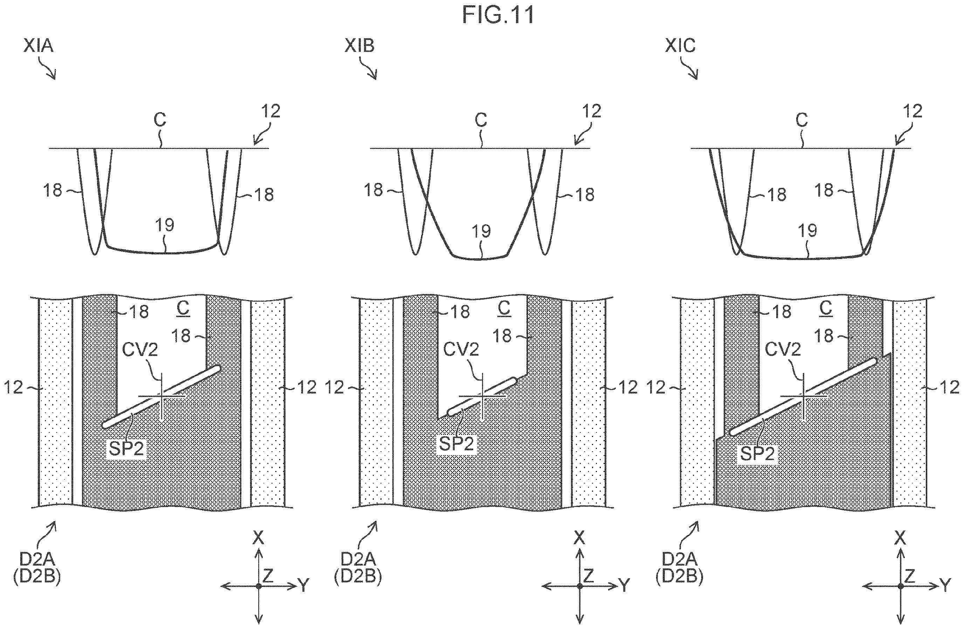

Fig. 11 is an explanatory diagram for illustrating the measurement of the processing quality of the hollowing processing by the processing quality measuring unit 56b. Note that reference character XIA in Fig. 11 designates an example of ideal hollowing processing, reference character XIB in Fig. 11 designates an example in which the processing width in the Y direction of the hollowing processing is insufficient, and reference character XIC in Fig. 11 designates an example in which the processing width in the Y direction of the hollowing processing is too large. Further, an upper stage of each example is a cross-sectional view of the two streaks of edge-cut grooves 18 and the hollowed groove 19, and a lower stage of each example is a diagram showing examples of captured images D2A and D2B.

As shown in Fig. 11 and Fig. 7 described above, the processing quality measuring unit 56b measures the processing quality of the hollowing processing based on the captured image D2A output from the camera 46A during the hollowing processing on the street C (outbound path), and also measures the processing quality of the hollowing processing based on the captured image D2B output from the camera 46B during the hollowing processing on the street C (inbound path).

Specifically, the processing quality measuring unit 56b detects the laser spot SP2 from the captured images D2A and D2B to measure the shape, size (diameter) and brightness of the laser spot SP2, and detects the position of the laser spot SP2 in the captured images D2A and D2B (within the visual field).

### <Correcting Unit>

Returning to Fig. 7, the correcting unit 58 determines correction values for the Y-direction positions of the edge-cutting processing and the hollowing processing based on the position accuracy measurement of the laser processing (the edge-cutting processing and the hollowing processing) by the position accuracy measuring unit 56a. In this way, during the laser processing on a street C (outbound and inbound paths) or after the laser processing on the street C, the laser processing control unit 52 drives the relative moving mechanism 28 to correct the Y-direction positions of the edge-cutting processing and the hollowing processing based on the correction values of the Y-direction positions of the edge-cutting processing and the hollowing processing which have been determined by the correcting unit 58. As a result, from the middle of the laser processing on the street C (outbound and inbound paths) or from the laser processing on a next street C, it is possible to correct the positional displacement in the Y-direction of the two streaks of edge-cut grooves 18 with respect to the street C and the positional displacement in the Y-direction of the hollowed groove 19 with respect to the two streaks of edge-cut grooves 18.

Further, the correcting unit 58 determines correction values for processing conditions (the light amounts of the laser light LA and LB, the processing widths of the edge-cutting processing and the hollowing processing, the relative Y-direction positions of the edge-cutting processing and the hollowing processing, and the like) of the edge-cutting processing and the hollowing processing based on the measurement of the processing quality of the laser processing (the edge-cutting processing and the hollowing processing) by the processing quality measuring unit 56b. In this way, during the laser processing on a street C (outbound and inbound paths) or after the laser processing on the street C, the laser processing control unit 52 controls the respective units of the laser head 24 to correct the processing conditions of the edge-cutting processing and the hollowing processing based on the correction values of the respective processing conditions which have been determined by the correcting unit 58. In this way, the processing conditions are corrected from the middle of the laser processing on the street C (outbound and inbound paths) or from the laser processing on a next street C. Note that in order to correct the processing conditions of laser processing (reference characters XB and XC in Fig. 10 and reference characters XIB and XIC in Fig. 11), an aperture stop mechanism may be provided in each of the main optical paths OP1 to OP3, or an adjustment mechanism (steering mirror mechanisms MIA and M1B) for adjusting the position and attitude of each mirror on the laser light path may be provided, or an adjustment mechanism for adjusting the position and orientation of each of the condensing lenses 38, 40A, and 40B may be provided.

Returning to Figs. 5 and 6, the steering mirror mechanism MIA is provided between the first laser light source 22A and the first light forming element 32. The steering mirror mechanism MIA includes two or more steering mirrors 102. The steering mirror mechanism MIA adjusts an angle of each of the steering mirrors 102 so as to correct positional deviation and deformation of the laser spots SP1 due to the fluctuation in emission direction of the laser light LA emitted from the first laser light source 22A. Further, the measurement results of the position accuracy measuring unit 56a and the processing quality measuring unit 56b can be fed back to the steering mirror mechanism M1A so that the steering mirror mechanism M1A can be driven based on the fed measurement results. As a result, it is possible to correct deviation in processing positions of the laser spots SP1, including the fluctuation factors of positions and attitudes in optical systems provided on a post-stage of the steering mirror mechanism MIA.

The steering mirror mechanism M1B is provided between the second laser light source 22B and the second light forming element 34. The steering mirror mechanism M1B includes two or more steering mirrors 102, similarly to the steering mirror mechanism M1A. The steering mirror mechanism M1B adjusts an angle of each of the steering mirrors 102 so as to correct positional deviation and deformation of the laser spots SP2 (the outbound direction side XA and the inbound direction side XB) due to the fluctuation in emission direction of the laser light LB emitted from the second laser light source 22B. Note that, the laser spot SP2 (on the outbound direction side XA) is a laser spot SP2 in a case where the processing feed direction is toward the outbound direction side XA, and the laser spot SP2 (on the inbound direction side XB) is a laser spot SP2 in a case where the processing feed direction is toward the inbound direction side XB.

Further, the measurement results of the position accuracy measuring unit 56a and the processing quality measuring unit 56b can be fed back to the steering mirror mechanism M1B so that the steering mirror mechanism M1B can be driven based on the fed measurement results. As a result, it is possible to correct deviation in processing positions of the laser spots SP2 (on the outbound direction side XA and the inbound direction side XB), including the fluctuation factors in positions and attitudes of optical systems provided on a post-stage of the steering mirror mechanism M1B. However, because it is impossible to individually and simultaneously perform correction for the laser spot SP2 (on the outbound direction side XA) and correction for the laser spot SP2 (on the inbound direction side XB), the steering mirror mechanism M1B performs adjustment depending on the processing feed direction (that is, the outbound direction side XA or the inbound direction side XB) in a case where the processing positions (hereinafter referred to as "Y-processing positions") in Y direction are deviated on both the outbound direction side XA and the inbound direction side XB.

A steering mirror mechanism M2A may be provided instead of the steering mirror mechanism MIA, and a steering mirror mechanism M2B may be provided instead of the steering mirror mechanism M1B.

The steering mirror mechanism M2A is provided between the first light forming element 32 and the beam splitter 33, and has a configuration the same as the configurations of the steering mirror mechanisms M1A and M1B. The steering mirror mechanism M2A adjusts an angle of each of the steering mirrors 102 so as to correct positional deviation and deformation of the laser spots SP1 due to the fluctuations in the position and the attitude of the first light forming element 32. Further, the measurement results of the position accuracy measuring unit 56a and the processing quality measuring unit 56b can be fed back to the steering mirror mechanism M2A so that the steering mirror mechanism M2A can be driven based on the fed measurement results. As a result, it is possible to correct deviation in processing positions of the laser spots SP1, including the fluctuation factors of positions and attitudes in optical systems provided on a post-stage of the steering mirror mechanism M2A.

The steering mirror mechanism M2B is provided between the second light forming element 34 and the beam splitter 35, and has a configuration the same as the configurations of the steering mirror mechanisms MIA and M1B. The steering mirror mechanism M2B adjusts an angle of each of the steering mirrors 102 so as to correct positional deviation and deformation of the laser spots SP2 (the outbound direction side XA and the inbound direction side XB) due to the fluctuation in the position and the attitude of the second light forming element 34. Further, the measurement results of the position accuracy measuring unit 56a and the processing quality measuring unit 56b can be fed back to the steering mirror mechanism M2B so that the steering mirror mechanism M2B can be driven based on the fed measurement results. As a result, it is possible to correct deviation in processing positions of the laser spots SP2 (on the outbound direction side XA and the inbound direction side XB), including the fluctuation factors in positions and attitudes of optical systems provided on a post-stage of the steering mirror mechanism M2B. However, because it is impossible to individually and simultaneously perform correction for the laser spot SP2 (on the outbound direction side XA) and correction for the laser spot SP2 (on the inbound direction side XB), the steering mirror mechanism M2B performs adjustment depending on the processing feed direction (that is, the outbound direction side XA or the inbound direction side XB) in a case where the processing positions (hereinafter referred to as "Y-processing positions") in Y direction are deviated on both the outbound direction side XA and the inbound direction side XB.

Note that, even in a case where only the steering mirror mechanism MIA (or the steering mirror mechanism M2A) is provided, it is possible to correct deviation of the Y-processing positions by aligning the Y-processing positions of the laser spots SP1 with the Y-processing positions of the laser spots SP2 (on the outbound direction side XA and the inbound direction side XB). On the contrary, even in a case where only the steering mirror mechanism M1B (or the steering mirror mechanism M2B) is provided, it is possible to correct deviation of the Y-processing positions by aligning the Y-processing positions of the laser spots SP2 (on the outbound direction side XA and the inbound direction side XB) with the Y-processing positions of the laser spots SP1.

Further, a steering mirror mechanism M3 may be provided between the connection switching element 36 and the beam splitter 37. The steering mirror mechanism M3 has a configuration the same as the configuration of each of the steering mirror mechanisms MIA to M2B. The steering mirror mechanism M3 can be driven so as to correct the positional deviation of the laser spot SP2 (on the inbound direction side XB). Note that, it is impossible to correct the positional deviation between the laser spots SP1 and the laser spot SP2 (on the inbound direction side XB) only by the steering mirror mechanism M3. It is required to use the steering mirror mechanisms M3 in combination with the steering mirror mechanism M1A (M2A) or the steering mirror mechanism M1B (M2B), in order to correct the positional deviation between the laser spots SP1 and the laser spot SP2 (on the inbound direction side XB).

With the steering mirror mechanism M3, it becomes unnecessary to change the position and the attitude of the steering mirror mechanism MIA (M2A) or the steering mirror mechanism M1B (M2B) provided on a preceding-stage of the steering mirror mechanism M3, both in a case where the processing feed direction is toward the outbound direction side XA and in a case where the processing feed direction is toward the inbound direction side XB.

The steering mirror mechanisms M1A to M3 described above may be arranged in the following four patterns.

### (First Pattern)

A first pattern is a pattern in which only one of the steering mirror mechanism MIA, the steering mirror mechanism M2A, the steering mirror mechanism M1B and the steering mirror mechanism M2B is arranged. In the first pattern, either of the first spots SP1 and the second spot SP2 are/is corrected so as to align with the other of the first spots SP1 and the second spot SP2. Note that, in a case where the shape of the laser spot is deformed on one side where the steering mirror mechanism is not arranged, because the other side where the steering mirror mechanism is arranged is to be corrected so as to align with deformed laser spot on the one side, there may be a case where the deformation of the laser spot cannot be corrected. In addition, in a case where there is a positional deviation between the second condensing lenses 40A and 40B, it is required to adjust the steering mirror mechanism for each of the processing feed directions (the outbound direction side XA and the inbound direction side XB).

### (Second Pattern)

A second pattern is a pattern in which either one of the steering mirror mechanism MIA and M2A is combined with either one of the steering mirror mechanism M1B and M2B. In the second pattern, because the positions of both the first laser spots SP1 and the second laser spot SP2 can be corrected, deformation of the shapes of the laser spots can be easily suppressed. Note that, there may be a case where it is impossible to suppress deformation in the shape of each of the laser lights L1 and L2 on the optical paths. In addition, in a case where there is a positional deviation between the second condensing lenses 40A and 40B, it is required to adjust the steering mirror mechanism for each of the processing feed directions (the outbound direction side XA and the inbound direction side XB).

### (Third Pattern)

A third pattern is a pattern in which either one of the steering mirror mechanisms M1A and M2A, either one of the steering mirror mechanisms M1B and M2B, and the steering mirror mechanism M3 are combined with each other. In the third pattern, as in the second pattern, because the positions of both the first laser spots SP1 and the second laser spot SP2 can be corrected, deformation of the shapes of the laser spots can be easily suppressed. Moreover, in the third pattern, even in a case where there is a positional deviation between the second condensing lenses 40A and 40B, it is not required to adjust the steering mirror mechanism for each of the processing feed directions (the outbound direction side XA and the inbound direction side XB).

### (Fourth Pattern)

A fourth pattern is a pattern in which all of the steering mirror mechanism MIA, the steering mirror mechanism M2A, the steering mirror mechanism M1B, the steering mirror mechanism M2B and the steering mirror mechanism M3 are provided. In the fourth pattern, in addition to the advantages achieved in the third pattern, the positions and the shapes of the laser lights L1 and L2 can be corrected in any points on the optical paths.

### <Notifying unit>

Returning to Fig. 7, based on measurement results of the position accuracy measuring unit 56a and the processing quality measuring unit 56b, the notifying unit 60 causes error information to be displayed on a monitor (not shown) or be output with sounds from a speaker (not shown) in a case where the position accuracy and processing quality of laser processing (the edge-cutting processing, the hollowing processing) do not meet predetermined criteria.

### [Operation of Laser Processing Apparatus of First Embodiment]

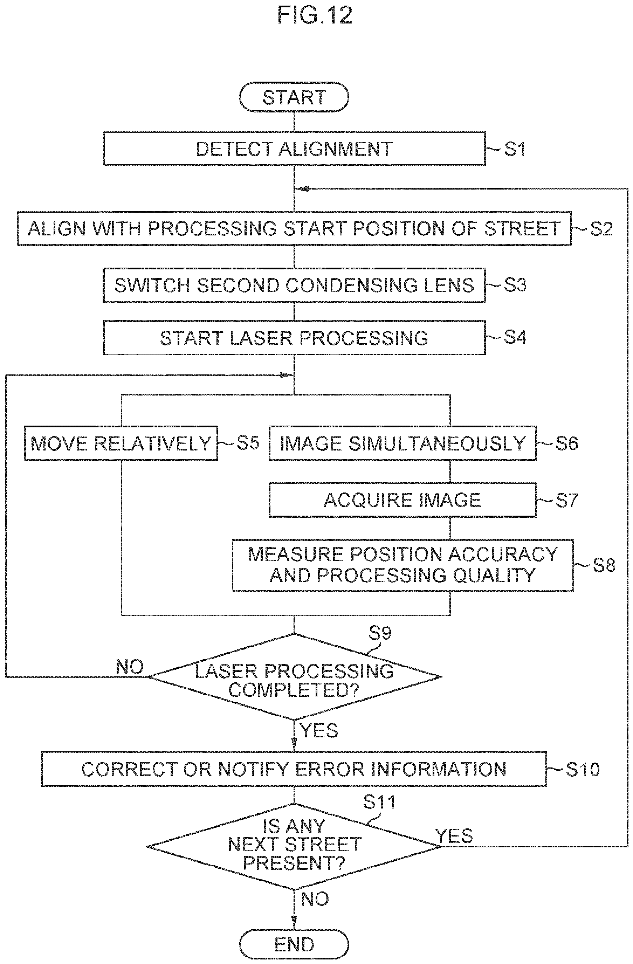

Fig. 12 is a flowchart showing the flow of the laser processing on each street C of the wafer 12 by the laser processing apparatus 10 having the above configuration.

As shown in Fig. 12, when the wafer 12 is held on the table 20, the alignment detecting unit 50 drives the relative moving mechanism 28 to move the microscope 26 relative to the wafer 12 to a position where an image of the alignment reference of the wafer 12 (not shown) can be captured, and then causes the microscope 26 to capture an image of the alignment reference. Then, the alignment detecting unit 50 performs alignment detection for detecting the position of each street C of the wafer 12 based on the captured image of the alignment reference imaged by the microscope 26 (step S1).

When the alignment detection is completed, the laser processing control unit 52 drives the relative moving mechanism 28 based on the detection result of the alignment detecting unit 50 to perform the positioning of the optical axis of the first condensing lens 38 of the laser head 24 with respect to the processing start position of a street C (outbound) (step S2).

Further, the laser processing control unit 52 drives the connection switching element 36 to switch the lens for emitting the second laser light L2 to the second condensing lens 40A (step S3). Note that the steps S2 and S3 may be executed in the reverse order or may be executed at the same time.

When the steps S2 and S3 are completed, the laser processing control unit 52 starts laser processing on the street C (outbound path) (step S4). First, the laser processing control unit 52 causes the first laser light source 22A to emit the laser light LA therefrom, whereby two first laser lights L1 are emitted from the first condensing lens 38 via the first light forming element 32, and the two first laser lights L1 are condensed on the processing start position on the street C (outbound path).

Next, the laser processing control unit 52 drives the relative moving mechanism 28 to move the laser head 24 toward the outbound direction side XA relative to the wafer 12, and causes the second laser light source 22B to emit the laser light LB therefrom in response to the optical axis of the second condensing lens 40A reaching the above-mentioned processing start position. In this way, the second laser light L2 passes through the second light forming element 34 and the connection switching element 36, and then is emitted from the second condensing lens 40A, and condensed on the processing start position.

Subsequently, the laser processing control unit 52 drives the relative moving mechanism 28 to move the laser head 24 toward the outbound direction side XA relative to the wafer 12 (step S5). In this way, as shown in Figs. 3 and 5, the formation of the two streaks of edge-cut grooves 18 by the edge-cutting processing and the formation of the hollowed groove 19 by the hollowing processing are simultaneously performed along the street C (outbound path) with being spaced from each other.

Further, simultaneously with the start of the laser processing, the imaging control unit 54 starts emission of the illumination light L3 from the illumination light source 41, imaging of each of the reflected lights R1 and R3 by the camera 45, and imaging of each of the reflected lights R2 and R3 by the camera 46A. In this way, the simultaneous imaging of the laser spots SP1 and the two streaks of edge-cut grooves 18 by the camera 45 and the simultaneous imaging of the laser spot SP2 and the two streaks of edge-cut grooves 18 by the camera 46A, are performed (step S6). Further, the measuring unit 56 acquires the captured image D1 output from the camera 45 and the captured image D2A output from the camera 46A (step S7).

The position accuracy measuring unit 56a and the processing quality measuring unit 56b of the measuring unit 56 measure the position accuracy (see Fig. 8) and the processing quality (see Fig. 10) of the edge-cutting processing based on the captured image D1. In addition, the position accuracy measuring unit 56a and the processing quality measuring unit 56b of the measuring unit 56 measure the position accuracy (see Fig. 9) and the processing quality (see Fig. 11) of the hollowing processing based on the captured image D2A (step S8).

Hereinafter, the processing of steps S5 to S8 is repeatedly executed until the laser processing on the street C (outbound path) is completed. In this way, the simultaneous imaging of the laser spots SP1 and the two streaks of edge-cut grooves 18 by the camera 45, the simultaneous imaging of the laser spot SP2 and the two streaks of edge-cut grooves 18 by the camera 46A, and the measurement of the position accuracy and processing quality of the laser processing are executed in parallel during the laser processing on the street C (outbound path) (NO in step S9).

In a case where the laser spots SP1 have reached a processing end position of the street C (outbound path), the laser processing control unit 52 stops the emission of the laser light LA from the first laser light source 22A. Then, in a case where the laser spot SP2 has reached the processing end position of the street C (outbound path), the laser processing control unit 52 stops the emission of the laser light LB from the second laser light source 22B and also stops the driving of the relative moving mechanism 28. In this way, the laser processing on the street C (outbound path) is completed (YES in step S9).

When the laser processing on the street C (outbound path) is completed, the correcting unit 58 determines correction values for the Y-direction positions of the edge-cutting processing and the hollowing processing based on the measurement results of the position accuracy of the edge cutting processing and the hollowing processing by the position accuracy measuring unit 56a. In this way, the misalignment in the Y-direction of the two streaks of edge-cut grooves 18 with respect to the street C (inbound path) and the misalignment in the Y-direction of the hollowed groove 19 with respect to the two streaks of edge-cut grooves 18 are corrected (step S10).

Further, the correcting unit 58 determines correction values for the processing conditions of the edge-cutting processing and the hollowing processing based on the measurement results of the processing quality of the edge-cutting processing and the hollowing processing by the processing quality measuring unit 56b. In this way, the processing condition of each of the edge-cutting processing and the hollowing processing is corrected from the edge-cutting processing and the hollowing processing for a next street C (inbound path) (step S10).

When the position accuracy and the processing quality of the laser processing (the edge-cutting processing, the hollowing processing) do not meet predetermined criteria based on the measurement results of the position accuracy measuring unit 56a and the processing quality measuring unit 56b, the notifying unit 60 executes notification of error information (step S10). In this way, it is possible to promote the operator to perform maintenance of the laser processing apparatus 10 (cleaning, position adjustment and the like of each unit of the laser head 24).

Note that after the laser processing on the street C is completed, instead of execution of the processing of step S10, the processing of step S10 may be executed in the middle of the laser processing on the street C (outbound path). In this way, it is possible to correct the Y-direction position and processing condition of the laser processing and notify the error information in the middle of the laser processing on the street C (outbound path).

When the laser processing on the street C (outbound path) is completed, the laser processing control unit 52 drives the relative moving mechanism 28 to perform alignment between the optical axis of the first condensing lens 38 and the processing start position of a next street C (inbound path) (YES in step S11, step S2). Further, the laser processing control unit 52 drives the connection switching element 36 to switch the lens for emitting the second laser light L2 to the second condensing lens 40B (step S3).

The processing of steps S4 to S10 described above is repeatedly executed. In this way, the laser processing on the street C (inbound path), the simultaneous imaging of the laser spots SP1 and the two streaks of edge-cut grooves 18 by the camera 45, the simultaneous imaging of the laser spot SP2 and the two streaks of edge-cut grooves 18 by the camera 46B, and the measurement of the position accuracy and processing quality of the laser processing are performed in parallel. Next, the correction of the Y-direction position and processing condition of the laser processing (the edge-cutting processing and the hollowing processing) and the notification of error information are executed.

Similarly, the above-described processing from step S2 to step S10 is repeatedly executed for each of all streets C (outbound and inbound paths) parallel to the X direction. Next, the laser processing control unit 52 drives the relative moving mechanism 28 to rotate the table 20 by 90°, whereby the remaining streets C parallel to the Y direction on the wafer 12 are made parallel to the X direction. Then, the above-mentioned series of processing is repeatedly executed, so that the laser processing is performed along each of the grid-like streets C.

### (Effect of First Embodiment)

As described above, in the laser processing apparatus 10 of the first embodiment, during the laser processing on the street C (outbound and inbound paths), it is possible to perform, in parallel, the simultaneous imaging of the laser spots SP1 and the two streaks of edge-cut grooves 18 by the camera 45, and the simultaneous imaging of the laser spot SP2 and the two streaks of edge-cut grooves 18 and the like by the cameras 46A and 46B. This enables real-time kerf check that immediately detects an abnormality in a case where the abnormality occurs during laser processing. Further, it is possible to detect an abnormality that cannot be detected by imaging and observing only either the processed grooves (the two streaks of edge-cut grooves 18 and the hollowed groove 19) or the laser spots SP1 and SP2 (reference character IXB in Fig. 9 and reference characters XB and XC in Fig. 10, reference character XIC in Fig. 11, and the like). As a result, the position accuracy and processing quality of the laser processing can be further improved.

### [Second Embodiment]

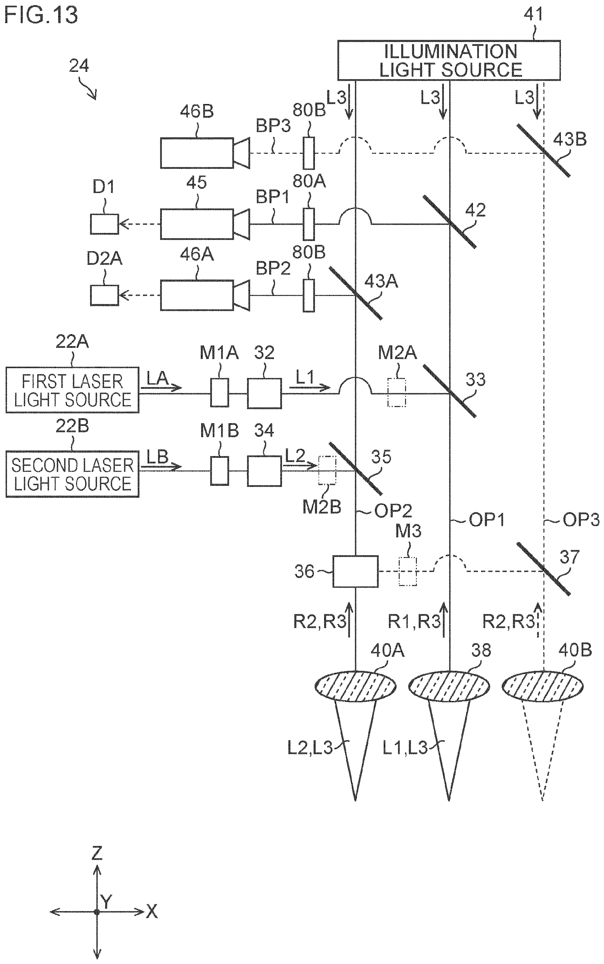

Fig. 13 is a schematic diagram of a laser head 24 of a laser processing apparatus 10 according to a second embodiment. In the first embodiment described above, imaging of the reflected lights R1 and R3 and imaging of the reflected lights R2 and R3 by the cameras 46A and 46B are performed. At this time, since the light amount of each of the laser lights L1 and L2 is larger than the light amount of the illumination light L3, the light amount of each of the reflected laser lights R1 and R2 is larger than the light amount of the reflected illumination light R3. As a result, so-called overexposure (halation) may occur in the captured images D1, D2A, and D2B. In this case, it becomes difficult to detect the laser spots SP1 and SP2 and the background around them (including the two streaks of edge-cut grooves 18 and the hollowed groove 19) from the captured images D1, D2A and D2B, or the detection accuracy deteriorates.

Therefore, as shown in Fig. 13, in the laser processing apparatus 10 of the second embodiment, a band stop filter 80A is provided in the middle of the branch optical path BP1 inside the laser head 24, and band stop filters 80B are respectively provided in the middle of the branch optical paths BP2 and BP3. Note that since the laser processing apparatus 10 of the second embodiment has basically the same configuration as the laser processing apparatus 10 of the first embodiment except that the band stop filters 80A and 80B are provided, components which are identical in function or configuration to those of the first embodiment are designated by the same reference numerals or characters, and the description thereof will be omitted.

The band stop filters 80A and 80B correspond to a light amount reducing filter of the present invention. The band stop filter 80A reduces the light amount of light in the wavelength region corresponding to the two first laser lights L1. Further, each band stop filter 80B reduces the light amount of light in the wavelength region corresponding to the second laser light L2. As described above, the illumination light L3 is a light in a wavelength region close to the wavelength region of the laser lights LA and LB in order to suppress the influence of aberrations in the first condensing lens 38 and the second condensing lenses 40A and 40B. However, the light is not in the same (substantially the same) wavelength region as the laser light LA and LB. Therefore, the band stop filters 80A and 80B can reduce only the light amounts of the reflected laser lights R1 and R2 without reducing the light amount of the reflected illumination light R3.

As described above, in the second embodiment, since only the light amounts of the reflected laser lights R1 and R2 can be reduced by the band stop filters 80A and 80B, occurrence of the above-mentioned overexposure can be prevented. As a result, the detection accuracy of the laser spots SP1 and SP2 and the background around them from the captured images D1, D2A and D2B is improved, so that the position accuracy and processing quality of the laser processing can be further improved as compared with the first embodiment.

Note that the band stop filter 80A may be provided between the beam splitter 33 and the beam splitter 42, and the band stop filters 80B may be respectively provided between the beam splitter 35 and the beam splitter 43A, and between the beam splitter 37 and the beam splitter 43B.

Instead of providing the band stop filters 80A and 80B, polarizing filters may be provided as the light amount reducing filter of the present invention. In this case, the polarization directions of the laser lights LA and LB are made different from the polarization direction of the illumination light L3 (when the illumination light source 41 is a laser light source), and the polarization direction of each polarizing filter is set to be orthogonal (substantially orthogonal) to the polarization directions of the laser lights LA and LB. In this way, only the light amounts of the reflected laser light R1 and R2 can be reduced. Further, in this case, since light in the same wavelength region as the laser lights LA and LB can be set as the illumination light L3, it is unnecessary to consider the influence of aberrations in the first condensing lens 38 and the second condensing lenses 40A and 40B.

### [Third Embodiment]

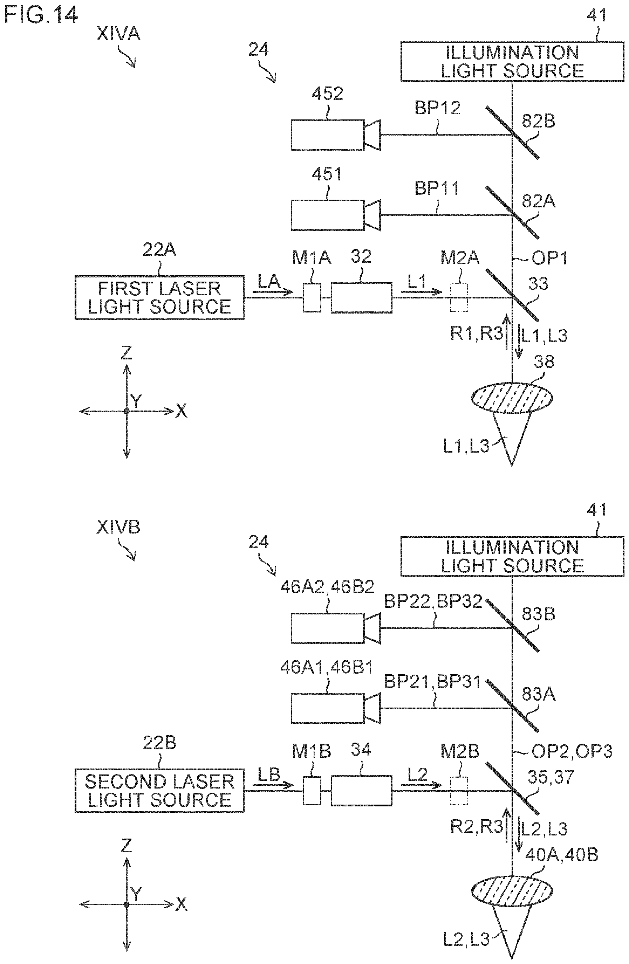

Fig. 14 is a schematic diagram of a laser head 24 of a laser processing apparatus 10 according to a third embodiment. Note that reference character XIVA in Fig. 14 designates only a configuration related to the edge-cutting processing in the laser head 24, and reference character XIVB designates only a configuration related to the hollowing processing. In the above-mentioned second embodiment, the band stop filters 80A and 80B prevent the occurrence of overexposure in the captured images D1, D2A and D2B. On the other hand, in the third embodiment, occurrence of overexposure in the captured images D1, D2A and D2B is prevented by another method. Note that since the laser processing apparatus 10 of the third embodiment has basically the same configuration as the laser processing apparatus 10 of the first embodiment, components which are identical in function or configuration to those of the first embodiment are designated by the same reference numerals or characters, and the description thereof will be omitted.

As designated by reference character XIVA in Fig. 14, a dichroic mirror 82A (including a dichroic prism) and a beam splitter 82B (including a half mirror) are arranged between the beam splitter 33 of the main optical path OP1 and the illumination light source 41.

The dichroic mirror 82A corresponds to a first branch optical element of the present invention, and a first branch optical path BP11 is split from the main optical path OP1 by the dichroic mirror 82A. The dichroic mirror 82A reflects a light in the wavelength region corresponding to the two first laser lights L1 and transmits a light in other wavelength regions therethrough. In this way, the dichroic mirror 82A reflects the reflected laser light R1 incident from the beam splitter 33 toward the first branch optical path BP11, and transmits the reflected illumination light R3 therethrough.

The beam splitter 82B corresponds to a second branch optical element of the present invention, and a second branch optical path BP12 is split from the main optical path OP1 by the beam splitter 82B. The beam splitter 82B reflects a part of the reflected illumination light R3 incident from the dichroic mirror 82A toward the second branch optical path BP12.

A first camera 451 is arranged on the first branch optical path BP11, and a second camera 452 is arranged on the second branch optical path BP12. The first camera 451 and the second camera 452 are the above-mentioned electronic cameras.

The first camera 451 is arranged on the first branch optical path BP11, and images the reflected laser light R1 incident from the dichroic mirror 82A. The second camera 452 is arranged on the second branch optical path BP12, and images the reflected illumination light R3 incident from the beam splitter 82B.

As shown in reference character XIVB in Fig. 14, dichroic mirrors 83A (including dichroic prisms) and beam splitters 83B (including half mirrors) are arranged between the beam splitter 35 of the main optical path OP2 and the illumination light source 41, and between the beam splitter 37 of the main optical path OP2 and the illumination light source 41, respectively. The dichroic mirrors 83A correspond to the first branch optical element of the present invention, and the beam splitters 83B correspond to the second branch optical element of the present invention.

A first branch optical path BP21 is split from the main optical path OP2 by the dichroic mirror 83A arranged on the main optical path OP2, and a first branch optical path BP31 from the main optical path OP3 by the dichroic mirror 83A arranged on the main optical path OP3. These dichroic mirrors 83A reflect a light in the wavelength region corresponding to the second laser light L2 and transmit a light in other wavelength regions. In this way, respective dichroic mirrors 83A reflect the reflected laser light R2 toward the first branch optical paths BP21 and BP31, and transmit the reflected illumination light R3 therethrough.

A second branch optical path BP22 is split from the main optical path OP2 by the beam splitter 83B arranged on the main optical path OP2, and a second branch optical path BP32 is split from the main optical path OP3 by the beam splitter 83B arranged on the main optical path OP3. These beam splitters 83B reflect a part of the reflected illumination light R3 incident from the dichroic mirror 83A toward the second branch optical paths BP22 and BP32, respectively.

A first camera 46A1 is arranged on the first branch optical path BP21, and a first camera 46B1 is arranged on the first branch optical path BP31. The first cameras 46A1 and 46B1 are the above-mentioned electronic cameras, and image the reflected laser light R2 incident from the dichroic mirrors 83A.

A second camera 46A2 is arranged on the second branch optical path BP22, and a second camera 46B2 is arranged on the second branch optical path BP32. The second cameras 46A2 and 46B2 are the above-mentioned electronic cameras, and image the reflected illumination light R3 incident from the beam splitters 83B.

A control device 30 (for example, a measuring unit 56) of the third embodiment combines an image captured by the first camera 451 and an image captured by the second camera 452 to generate a captured image D1. Similarly, the control device 30 combines an image captured by the first camera 46A1 and an image captured by the second camera 46A2 to generate a captured image D2A, and also combines an image captured by the first camera 46B1 and an image captured by the second camera 46B2 to generate a captured image D2B.

Here, the sensitivity of the first camera 451 is set to be lower than the sensitivity of the second camera 452, and the sensitivity of the first cameras 46A1 and 46B1 is also set to be lower than the sensitivity of the second cameras 46A2 and 46B2. Therefore, it is possible to prevent occurrence of overexposure in the captured images D1, D2A, and D2B.

As described above, it is also possible in the third embodiment to prevent occurrence of the above-mentioned overexposure without darkening the images of the processed grooves (the two streaks of edge-cut grooves 18 and the hollowed groove 19) based on the reflected illumination light R3, so that the same effect as that of the second embodiment can be obtained.

Note that in the third embodiment, the reflected laser lights R1 and R2 are reflected by the dichroic mirrors 82A and 83A. However, instead of the reflected laser lights R1 and R2, the reflected illumination light R3 may be reflected. In this case, the first cameras 451, 46A1 and 46B1 image the reflected illumination light R3, and the second cameras 452, 46A2 and 46B2 image the reflected laser lights R1 and R2. Therefore, in this case, the sensitivity of the second cameras 452, 46A2 and 46B2 is set to be lower than the sensitivity of the first cameras 451, 46A1 and 46B1.

Further, in the third embodiment, in a case where the two first laser lights L1, the second laser light L2, and the illumination light L3 are set to have polarization directions different from each other, polarizing beam splitters may be provided in place of the dichroic mirrors 82A and 83A and the beam splitters 82B and 83B.

### [Fourth Embodiment]

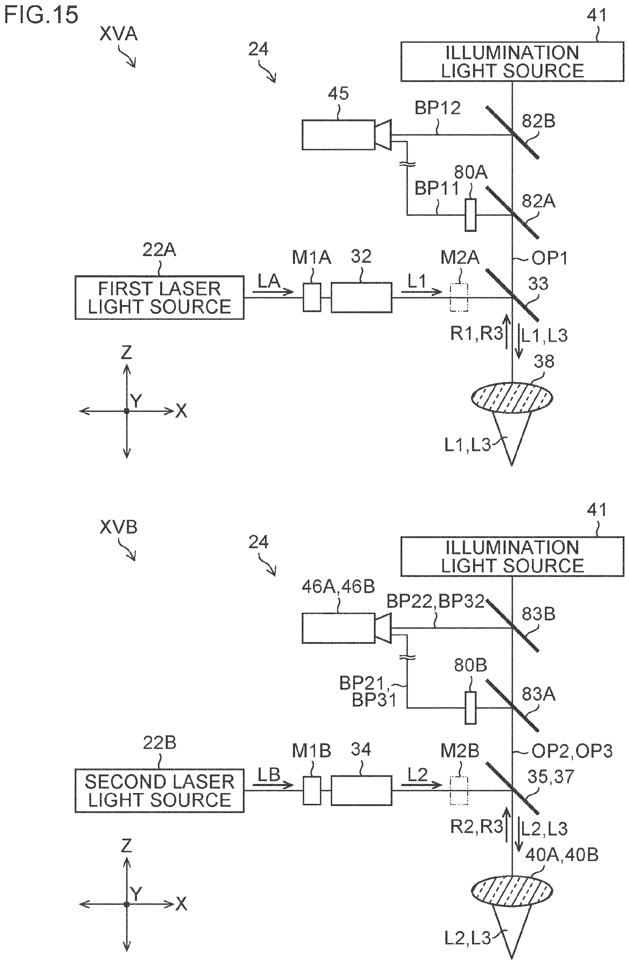

Fig. 15 is a schematic diagram of the laser head 24 of the laser processing apparatus 10 according to a fourth embodiment. Note that reference character XVA in Fig. 15 designates only a configuration related to the edge-cutting processing in the laser head 24, and reference character XVB designates only a configuration related to the hollowing processing. Note that the laser processing apparatus 10 of the fourth embodiment has basically the same configuration as the laser processing apparatus 10 of each of the above embodiments (particularly the third embodiment) except that a part of the configuration of the laser head 24 is changed. Therefore, components which are identical in function or configuration to those of each of the above embodiments are designated by the same reference numerals or characters, and the description thereof will be omitted.

As shown in reference character XVA in Fig. 15, the first branch optical path BP11 and the second branch optical path BP12 are connected to the camera 45. Further, as shown in reference character XVB in Fig. 15, the first branch optical path BP21 and the second branch optical path BP22 are connected to the camera 46A, and the first branch optical path BP31 and the second branch optical path BP32 are connected to the camera 46B. In this way, similarly to the first embodiment, the camera 45 images each of the reflected lights R1 and R3 to generate a captured image D1, and the cameras 46A and 46B image the reflected lights R2 and R3 to generate captured images D2A and D2B, respectively.

In the fourth embodiment, a band stop filter 80A is provided in the middle of the first branch optical path BP11, and band stop filters 80B are provided in the middle of the first branch optical paths BP21 and BP31. In this way, as in the second embodiment, only the light amounts of the reflected laser lights R1 and R2 can be reduced without reducing the light amount of the reflected illumination light R3.

In the fourth embodiment, the optical path lengths of the first branch optical path BP11 and the second branch optical path BP12 are made different from each other, the optical path lengths of the first branch optical path BP21 and the second branch optical path BP22 are made different from each other, and the optical path lengths of the first branch optical path BP31 and the second branch optical path BP32 are made different from each other.

Specifically, in order to reduce the influence of aberrations in the first condensing lens 38 which are caused by the difference in wavelength region between the two first laser lights L1 (laser light LA) and the illumination light L3, the optical path length of the first branch optical path BP11 is adjusted according to the wavelength region of the two first laser lights L1, and also the optical path length of the second branch optical path BP12 is adjusted according to the wavelength region of the illumination light L3. Further, in order to reduce the influence of aberrations in the second condensing lenses 40A and 40B which are caused by the difference in wavelength region between the second laser light L2 (laser light LB) and the illumination light L3, the optical path lengths of the first branch optical paths BP21 and BP31 are adjusted according to the wavelength region of the second laser light L2, and also the optical path lengths of the second branch optical paths BP22 and BP32 are adjusted according to the wavelength region of the illumination light L3.

As described above, in the fourth embodiment, by providing the band stop filters 80A and 80B in the middle of the first branch optical paths BP11, BP21 and BP31, it is possible to prevent occurrence of overexposure in the captured images D1, D2A and D2B as in the case of the second embodiment. Further, by adjusting the optical path length of each optical path for each wavelength range of various kinds of light, it is possible to adsorb the influence of aberrations of the respective condensing lenses 38, 40A and 40B, so that the wavelength region of the illumination light L3 is not required to be close to the wavelength regions of the respective laser lights L1 and L2.

Note that in the fourth embodiment, the reflected illumination light R3 may be reflected to the first branch optical paths BP11, BP21 and BP31 by the dichroic mirrors 82A and 83A, and the reflected laser lights R1 and R2 may be reflected to the second branch optical paths BP12, BP22, and BP32 by the beam splitters 82B and 83B. In this case, the band stop filters 80A and 80B are provided in the middle of the second branch optical paths BP12, BP22 and BP32.

In the fourth embodiment, polarizing filters may be provided instead of the band stop filters 80A and 80B as described in the second embodiment, or polarizing beam splitters may be provided as described in the third embodiment.

### [Fifth Embodiment]

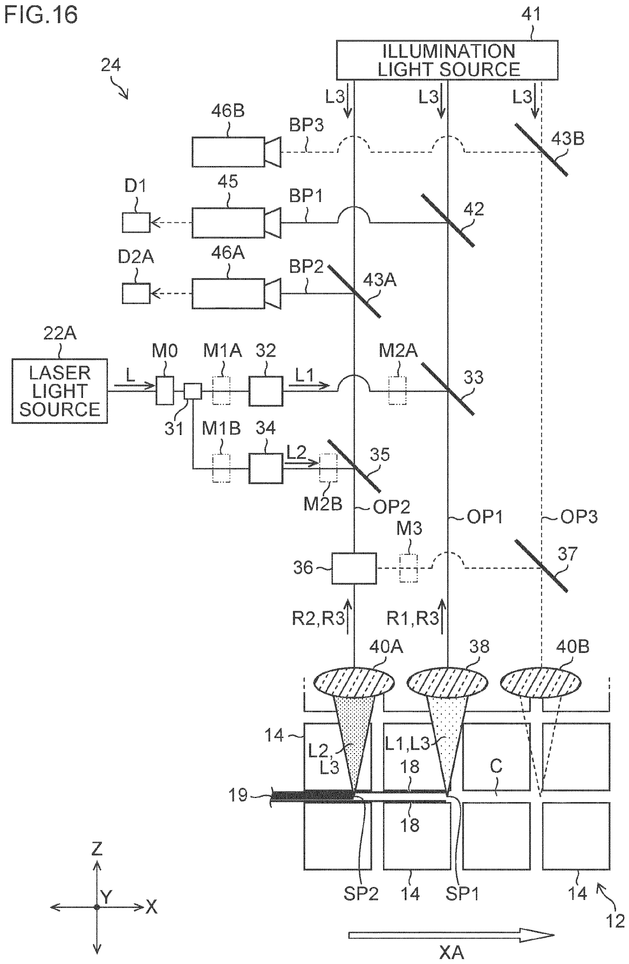

Fig. 16 is a schematic diagram of a laser head 24 of a laser processing apparatus 10 according to a fifth embodiment. As shown in Fig. 16, the laser processing apparatus 10 of the fifth embodiment has basically the same configuration as the laser processing apparatus 10 of each of the above-mentioned embodiments (particularly, the first embodiment) except that a laser light source 22, a branching element 31 and a steering mirror mechanism M0 are provided instead of the first laser light source 22A for the edge-cutting processing and the second laser light source 22B for the hollowing processing. Therefore, components which are identical in function or configuration to those of the first embodiment are designated by the same reference numerals or characters, and the description thereof will be omitted. Note that, in the fifth embodiment, the steering mirror mechanism MIA is arranged between the branching element 31 and the first light forming element 32, and the steering mirror mechanism M1B is arranged between the branching element 31 and the second light forming element 34.

The laser light source 22 emits, toward the branching element 31 through the steering mirror mechanism M0, laser light L satisfying conditions (wavelength, pulse width, repetition frequency, etc.) suitable for both the edge-cutting processing and the hollowing processing.

The steering mirror mechanism M0 has a configuration the same as the configuration of each of the steering mirror mechanisms MIA to M3. The steering mirror mechanism M0 is used to adjust the angle of each of the steering mirrors 102 so as to correct the deviation in the processing position and the deformation of each of the laser spots SP1 and SP2 due to fluctuation in a position and an attitude of the laser light source 22. In this case, because the Y-processing positions of the three processing points (each laser spots SP1 and SP2) moves simultaneously, it is impossible to correct the deviation in the processing position due to the fluctuation in positions and attitudes of the optical systems provided on the post-stage of the steering mirror mechanism M0.

For example, a beam splitter or the like is used as the branching element 31. The branching element 31 splits the laser light L emitted from the laser light source 22 into two parts, and emits one of the two split parts of the laser light L to the first light forming element 32, and emits the other of the two split parts of the laser light L to the second light forming element 34. Here, the laser processing apparatus 10 may be configured such that one of the two split parts of the laser light L is emitted from the branching element 31 to the first light forming element 31 through the steering mirror mechanism MIA, and the other of the two split parts of the laser light L is emitted to the second light forming element 34 through the steering mirror mechanism M1B. In this way, the two first laser lights L1 are emitted from the first light forming element 32, and the second laser light L2 is emitted from the second light forming element 34 as in the case of the above-described respective embodiments.

As described above, in the fifth embodiment, it is sufficient to provide only one type of laser light source 22, so that the laser head 24 can be miniaturized and the cost thereof can be reduced.

### [Sixth Embodiment]

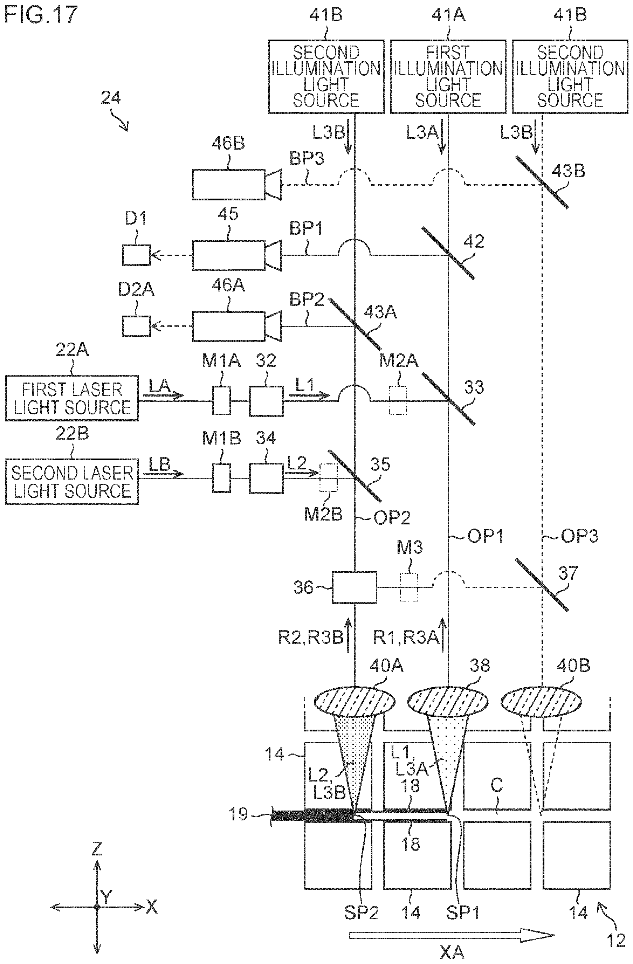

Fig. 17 is a schematic diagram of a laser head 24 of a laser processing apparatus 10 according to a sixth embodiment. In each of the above-described embodiments, the street C (the two streaks of edge-cut grooves 18 and the hollowed groove 19) is illuminated by using the illumination light L3 emitted from the same illumination light source 41. On the other hand, as shown in Fig. 17, the street C may be illuminated by using a first illumination light source 41A and second illumination light sources 41B which are different from each other, depending on the type of laser processing (the edge-cutting processing and the hollowing processing).

The laser processing apparatus 10 of the sixth embodiment has basically the same configuration as the laser processing apparatus 10 of the first embodiment except that the first illumination light source 41A and the second illumination light sources 41B are provided instead of the illumination light source 41. Therefore, components which are identical in function or configuration to those of the first embodiment are designated by the same reference numerals or characters, and the description thereof will be omitted.

The first illumination light source 41A emits illumination light L3A suitable for observing the edge-cutting processing toward the beam splitter 42. In this way, during the edge-cutting processing on the street C, the street C and the two streaks of edge-cut grooves 18 (an edge-cutting processing region of the street C) are illuminated with the illumination light L3A. Then, the reflected illumination light R3A which is the reflected light of the illumination light L3A reflected by the street C, is imaged together with the reflected laser light R1 described above by the camera 45.

The second illumination light source 41B emits illumination light L3B suitable for observing the hollowing processing toward the beam splitters 43A and 43B. In this way, the street C and the hollowed groove 19 (a hollowing processing region of the street C) are illuminated with the illumination light L3B during the hollowing processing on the street C. Then, the reflected illumination light R3B which is the reflected light of the illumination light L3B reflected from the street C, is imaged together with the reflected laser light R2 described above by the cameras 46A and 46B.

By providing the first illumination light source 41A and the second illumination light source 41B which are different from each other depending on the type of laser processing as described above, the street C can be illuminated by using the illumination light L3A and the illumination light L3B whose wavelength regions are different from each other (may be partially overlapped with each other) in the edge-cutting processing and the hollowing processing.

Note that in the laser processing apparatus 10 of each of the second to fifth embodiments, the first illumination light source 41A and the second illumination light source 41B may be provided instead of the illumination light source 41.

### [Seventh Embodiment]

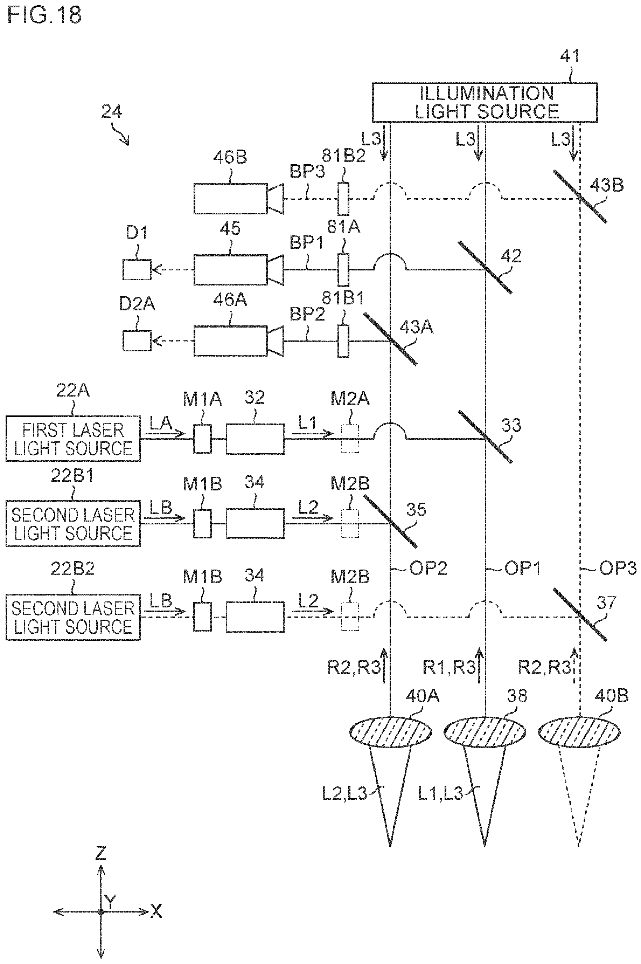

Fig. 18 is a schematic diagram of a laser head 24 of a laser processing apparatus 10 according to a seventh embodiment. In each of the above-mentioned embodiments, the same second laser light source 22B is used to perform the hollowing processing on the street C for the outbound and inbound paths. On the other hand, as shown in Fig. 18, the hollowing processing on the street C may be performed by using two second laser light sources 22B1, 22B2 which are different between the outbound and inbound paths.

The laser processing apparatus 10 of the seventh embodiment has basically the same configuration as the laser processing apparatus 10 of the second embodiment except that: second laser light sources 22B1 and 22B2, two second light forming elements 34, and polarizing filters 81A, 81B1 and 81B2 are provided instead of the second laser light source 22B, the connection switching element 36, and the band stop filters 80A and 80B; and that the arrangement of the steering mirror mechanisms M1B and M2B is partially changed. Therefore, components which are identical in function or configuration to those of the second embodiment are designated by the same reference numerals or characters, and the description thereof will be omitted.

Note that in the seventh embodiment, the first laser light source 22A and the first light forming element 32 constitute a first laser light emitting system of the present invention, and the laser light LA (two first laser lights L1) emitted from the first laser light source 22A is linearly polarized light. Further, in a case where the illumination light source 41 is a laser light source, the polarization direction of the illumination light L3 is different from the polarization directions of the laser lights LA and LB.

The second laser light source 22B1 and the second laser light source 22B2 emit respectively laser lights LB having different polarization directions or the same polarization direction toward the second light forming elements 34. Note that the second laser light source 22B1 and the second light forming element 34, and the second laser light source 22B2 and the second light forming element 34 constitute two second laser light emitting systems of the present invention.

The laser light LB emitted from the second laser light source 22B1 is formed into a second laser light L2 by the second light forming element 34, and then is made incident to the beam splitter 35. As a result, the second laser light L2 is reflected toward the second condensing lens 40A by the beam splitter 35, and is condensed on the street C (outbound path) by the second condensing lens 40A.

Further, the laser light LB emitted from the second laser light source 22B2 is formed into a second laser light L2 by the second light forming element 34, and then is made incident to the beam splitter 37. As a result, the second laser light L2 is reflected toward the second condensing lens 40B by the beam splitter 37, and is condensed on the street C (inbound path) by the second condensing lens 40B.

Note that in the seventh embodiment, optical paths of the two first laser lights L1 (including various optical elements provided on the optical paths) extending from the first light forming element 32 to the first condensing lens 38 constitute a first connection optical system of the present invention. Further, an optical path extending from one of the second light forming elements 34 to the second condensing lens 40A and an optical path extending from the other of the second light forming elements 34 to the second condensing lens 40B constitute a second connection optical system of the present invention.

By using the second laser light source 22B1 and the second laser light source 22B2 as described above, it is possible to performing the hollowing processing on the street C by using the second laser light sources 22B1 and 22B2 (that is, the second laser lights L2 having different polarization directions) which are different between the outbound path and the inbound path.

Note that specific processing control is basically the same as that of each of the above-mentioned embodiments. However, in a case where the hollowing processing on the street C (outbound path) is performed, the second laser light source 22B1 is turned on and the second laser light source 22B2 is turned off, or a shutter is inserted onto the optical path of the laser light LB emitted from the second laser light source 22B2. On the contrary, in a case where the hollowing processing on the street C (inbound path) is performed, the second laser light source 22B1 is turned off and the second laser light source 22B2 is turned on, or a shutter is inserted onto the optical path of the laser light LB emitted from the second laser light source 22B1. These switching mechanisms also constitute a part of the second connection optical system of the present invention.

The polarizing filter 81A has a polarization axis orthogonal to the polarization direction of the laser light LA (two first laser lights L1) emitted from the first laser light source 22A, and reduces the light amount of the reflected laser light R1

The polarizing filter 81B1 has a polarization axis orthogonal to the polarization direction of the laser light LB (second laser light L2) emitted from the second laser light source 22B1, and reduces the light amount of the reflected laser light R2 incident through the second condensing lens 40A and the like. Further, the polarizing filter 81B2 has a polarization axis orthogonal to the polarization direction of the laser light LB (second laser light L2) emitted from the second laser light source 22B2, and reduces the light amount of the reflected laser light R2 incident through the second condensing lens 40B and the like.

As described above, in the seventh embodiment, the light amounts of the reflected laser lights R1 and R2 can be also reduced by respective polarizing filters 81A, 81B1 and 81B2, so that the same effect as in the second embodiment can be obtained. Further, by adjusting the polarization direction of the laser light LB emitted from each of the second laser light sources 22B1 and 22B2 and/or the polarization direction of each of the polarizing filters 81B1 and 81B2, the light amount of the reflected laser light R2 incident to each of the cameras 46A and 46B can be adjusted independently.

Note that the polarizing filters 81A, 81B1, and 81B2 are provided in the seventh embodiment, but the polarizing filters 81A, 81B1, and 81B2 may be omitted. Further, in this case, the second laser light source 22B1 and the second laser light source 22B2 may be provided in each of the embodiments other than the fifth embodiment. Further, in the seventh embodiment, the first illumination light source 41A and the second illumination light source 41B may be also provided instead of the illumination light source 41 as the case of in the sixth embodiment.

### [Others]

In each of the above-mentioned embodiments, since the hollowed groove 19 is formed between the two streaks of edge-cut grooves 18 at all times, it is impossible to perform simultaneous imaging of the hollowed groove 19 and the laser spot SP2 alone. However, simultaneous imaging of the hollowed groove 19 and the laser spot SP2 alone may be performed by independently performing the hollowing processing on the wafer 12 (for example, an outer peripheral margin region or an intersection of the street C). In this case, the processing quality of the hollowing processing can be measured based on the positional relationship between the hollowed groove 19 and the laser spot SP2, and the processing condition of the hollowing processing can be corrected or error information can be notified based on the measurement result of the processing quality.

The laser processing apparatus 10 of each of the above-mentioned embodiments includes: one first condensing lens 38 for the edge-cutting processing; and the second condensing lenses 40A and 40B for the hollowing processing between which the first condensing lens 38 is interposed. However, the first condensing lens 38 and the second condensing lenses 40A and 40B may be interchanged with each other. In other words, the laser processing apparatus 10 includes two first condensing lenses for the edge-cutting processing and one second condensing lens for the hollowing processing which is provided between the two first condensing lenses, and the connection switching between the two first condensing lenses may be performed according to the processing feed direction.

The laser processing apparatus 10 of each of the above-mentioned embodiments includes one first condensing lens 38 for the edge-cutting processing and the second condensing lenses 40A and 40B for the hollowing processing between which the first condensing lens 38 is interposed. However, the present invention can also be applied to a laser processing apparatus 10 including only one first condensing lens for the edge-cutting processing and only one second condensing lens for the hollowing processing. Further, the laser processing apparatus 10 of the present invention is not limited to a laser processing apparatus for performing the edge-cutting processing and the hollowing processing along the street C. The present invention can be also applied to a laser processing apparatus 10 for performing various kinds of publicly-known laser processing along the street C.

In each of the above-mentioned embodiments, ON/OFF-switching between the edge-cutting processing and the hollowing processing is performed by performing ON/OFF-switching between the first laser light source 22A and the second laser light source 22B (laser light source 22). However, the first laser light source 22A and the second laser light source 22B (laser light source 22) may be set to ON at all times. In this case, for example, a shutter is inserted into/removed from the optical path of each laser light LA, LB, L, or a shutter is inserted into/removed from the optical path of each laser lights L1, L2, or the above manners are combined, so as to perform switching ON/OFF between the edge-cutting processing and the hollowing processing.

Each of the above-described embodiments includes the steering mirror mechanism provided on the optical paths. However, shift mirrors may be provided instead of the steering mirror mechanisms. That is, it is possible to adopt a configuration including, as the mirror mechanism of the present invention, a plurality of mirrors arranged on the optical paths of the respective types of the laser lights and an adjustment mechanism configured to adjust at least one of a position and an attitude of the plurality of mirrors.

### [Reference Signs List]

- 10: laser processing apparatus
- 12: wafer
- 14: chip
- 16: device
- 18: edge-cut groove
- 19: hollowed groove
- 20: table
- 22: laser light source
- 22A: first laser light source
- 22B, 22B1, 22B2: second laser light source
- 24: laser head
- 26: microscope
- 28: relative moving mechanism
- 30: control device
- 31: branching element
- 32: first light forming element
- 33, 35, 37: beam splitter
- 34: second light forming element
- 36: connection switching element
- 38: first condensing lens
- 40A, 40Bs: econd condensing lens
- 41: illumination light source
- 41A: first illumination light source
- 41B: second illumination light source
- 42, 43A, 43B: beam splitter
- 45, 46A, 46B: camera
- 451, 46A1, 46B1: first camera
- 452, 46A2, 46B2: second camera
- 49: operation unit
- 50: alignment detecting unit
- 52: laser processing control unit
- 54: imaging control unit
- 56: measuring unit
- 56a: position accuracy measuring unit
- 56b: processing quality measuring unit
- 58: correcting unit
- 60: notifying unit
- 80A, 80B: band stop filter
- 81A, 81B1, 81B2: polarizing filter
- 82A, 83A: dichroic mirror
- 82B, 83B: beam splitter
- BP1, BP2, BP3: branch optical path
- BP11, BP21, BP31: first branch optical path
- BP12, BP22, BP32: second branch optical path
- C: street
- CV1, CV2: center of visual field
- D1, D2A, D2B: captured image
- L, LA, LB: laser light
- L1: first laser light
- L2: second laser light
- L3, L3A, L3B: illumination light
- OP1 to OP3: main optical path
- R1, R2: reflected laser light
- R3, R3A, R3B: reflected illumination light
- SP1, SP2: laser spot
- XA: outbound direction side
- XB: inbound (return) direction side
- M0, MIA, M1B, M2A, M2B, M3: steering mirror mechanism

## Claims

1. A laser processing apparatus which performs laser processing by relatively moving a table for holding a wafer and a laser head having a condensing lens for condensing a laser light onto a street on the wafer held on the table in a processing feed direction along the street while irradiating the street with a laser light from the laser head, so as to form a groove along the street, the laser processing apparatus comprising:
a camera configured to simultaneously capture an image of a laser spot of the laser light condensed on the street via the condensing lens and the groove while the laser processing is performed; and
a measuring unit configured to measure position accuracy and processing quality of the laser processing based on the image captured by the camera.

2. The laser processing apparatus according to claim 1, further comprising:
an illumination light source which is configured to emit an illumination light;
a main optical path which is configured to guide the laser light and the illumination light emitted from the illumination light source to the condensing lens, and to which a first reflected light of the laser light and a second reflected light of the illumination light reflected from the street are incident from the condensing lens; and
a branch optical element arranged on the main optical path, and configured to emit the first reflected light and the second reflected light incident to the main optical path toward a branched optical path split from the main optical path,
wherein the camera is arranged on the branched optical path and images the first reflected light and the second reflected light to generate an image of the laser spot and the groove.

3. The laser processing apparatus according to claim 2, further comprising
a light amount reducing filter arranged on the branched optical path and configured to reduce a light amount of the first reflected light incident to the camera.

4. The laser processing apparatus according to claim 3,
wherein a wavelength of the laser light and a wavelength region of the illumination light are different from each other, and
wherein the light amount reducing filter is a band stop filter configured to reduce a light amount of light corresponding to a wavelength region of the laser light.

5. The laser processing apparatus according to any one of the preceding claims, further comprising:
an illumination light source configured to emit an illumination light in a wavelength region different from a wavelength region of the laser light;
a main optical path which is configured to guide the laser light and the illumination light emitted from the illumination light source to the condensing lens, and to which a first reflected light of the laser light and a second reflected light of the illumination light reflected from the street are incident from the condensing lens;
a first branch optical element arranged on the main optical path, and configured to emit the first reflected light incident to the main optical path toward a first branched optical path split from the main optical path; and
a second branch optical element arranged on the main optical path, and configured to emit the second reflected light incident to the main optical path toward a second branched optical path split from the main optical path,
wherein the camera includes: a first camera arranged on the first branched optical path and configured to image the first reflected light; and a second camera arranged on the second branched optical path and configured to image the second reflected light, and
wherein sensitivity of the first camera is set to be lower than sensitivity of the second camera.

6. The laser processing apparatus according to any one of claims 1 to 5,
wherein edge-cutting processing for forming two streaks of grooves parallel to each other along the street, and hollowing processing for forming a groove between the two streaks of grooves are performed as the laser processing, and
the camera simultaneously images the laser spots and the grooves corresponding to the edge-cutting processing through the condensing lens while the edge-cutting processing is performed, and simultaneously images the laser spot and the groove corresponding to the hollowing processing through the condensing lens while the hollowing processing is performed.

7. The laser processing apparatus according to claim 6, further comprising:
a first illumination light source for illuminating an edge-cutting region of the street through the condensing lens while the edge-cutting processing is performed; and
a second illumination light source for illuminating a hollowing region of the street through the condensing lens while the hollowing processing is performed.

8. The laser processing apparatus according to any one of claims 1 to 7, further comprising
a mirror mechanism provided on the optical path of the laser light,
wherein the mirror mechanism includes:
a plurality of mirrors; and
an adjustment mechanism configured to adjust at least ones of positions and attitudes of the plurality of mirrors.

9. The laser processing apparatus according to any one of the preceding claims,
wherein the condensing lens includes:
a first condensing lens; and
two second condensing lenses which are arranged in a row along the processing feed direction together with the first condensing lens, with the first condensing lens being interposed between the second condensing lenses,
wherein the laser head includes:
a laser light emitting system configured to emit two first laser lights corresponding to the edge-cutting processing and a second laser light corresponding to the hollowing processing as the laser light; and
a connection optical system configured to guide the two first laser lights emitted from the laser light emitting system to the first condensing lens, and guide the second laser light emitted from the laser light emitting system selectively to the two second condensing lenses,
wherein in a case where the laser head is moved relative to the table, toward any one direction side of an outbound direction side and an inbound direction side in the processing feed direction, the connection optical system guides the second laser light emitted from the laser light emitting system to one of the second condensing lenses which is located on another direction side of the outbound direction side and the inbound direction side with respect to the first condensing lens, and
wherein the camera is provided for each of the first condensing lens and the two second condensing lenses.

10. The laser processing apparatus according to claim 9,
wherein the laser light emitting system comprises:
a laser light source configured to emit the laser light;
a branching element configured to split the laser light emitted from the laser light source into two parts;
a first light forming element configured to form and emit the two first laser lights from one of the two parts of the laser light split by the branching element;
a second light forming element configured to form and emit the second laser light from another of the two parts of the laser light split by the branching element; and
a mirror mechanism arranged on at least either optical paths of the two first laser lights or an optical path of the second laser light, and
wherein the mirror mechanism includes:
a plurality of mirrors; and
an adjustment mechanism configured to adjust at least ones of positions and attitudes of the plurality of mirrors.

11. The laser processing apparatus according to any one of the preceding claims,
wherein the condensing lens includes:
a first condensing lens; and
two second condensing lenses arranged in a row along the processing feed direction together with the first condensing lens ,with the first condensing lens being interposed between the second condensing lenses, and
wherein the laser head comprises:
a first laser light emitting system configured to emit two first laser lights corresponding to the edge-cutting processing as the laser light;
two second laser light emitting systems configured to emit a second laser light corresponding to the hollowing processing as the laser light;
a first connection optical system configured to guide the two first laser lights emitted from the first laser light emitting system to the first condensing lens; and
a second connection optical system configured to guide the second laser light emitted from one of the second laser light emitting systems to one of the second condensing lenses which is located on an inbound direction side in the processing feed direction with respect to the first condensing lens in a case where the laser head is moved relative to the table, toward an outbound direction side in the processing feed direction, and guide the second laser light emitted from the other of the second laser light emitting systems to another of the second condensing lenses which is located on the outbound direction side in the processing feed direction with respect to the first condensing lens in a case where the laser head is moved relative to the table, toward the inbound direction side in the processing feed direction, and
wherein the camera is provided for each of the first condensing lens and the two second condensing lenses.

12. The laser processing apparatus according to claim 11, further comprises
a mirror mechanism arranged on optical paths of the two first laser lights and an optical path of the second laser light,
wherein the mirror mechanism includes:
a plurality of mirrors; and
an adjustment mechanism configured to adjust at least ones of positions and attitudes of the plurality of mirrors.
